# EUROPEAN PATENT APPLICATION

(11) **EP 4 507 350 A1**
(43) Date of publication of application: **12.02.2025**
(21) Application number: 23780175.8
(22) Date of filing: 24.03.2023
(51) Int. Cl.: H04W 8/22, H04W 16/28, H04W 24/10

(54) **TERMINAL DEVICE, BASE STATION DEVICE, AND COMMUNICATION METHOD**

(30) Priority: 01.04.2022 JP 2022061682
(71) Applicant: Sharp Kabushiki Kaisha, Sakai City, Osaka 590-8522 (JP)
(72) Inventor: MORIMOTO Ryota, Osaka 590-8522 (JP); FUKUI Takahisa, Osaka 590-8522 (JP); YOKOMAKURA Kazunari, Osaka 590-8522 (JP)
(74) Representative: Müller-Boré & Partner Patentanwälte PartG mbB
(86) International application number: PCT/JP2023/011838
(87) International publication number: WO 2023/190165

(57) **Abstract**

A terminal apparatus includes a reception unit that receives a PDCCH in which DCI for scheduling a PUSCH is mapped and a transmission unit that transmits the PUSCH, in which the transmission unit transmits capability information of a terminal, the capability information of the terminal is information indicating the number of first antenna ports of a first dimension and a second dimension, the reception unit receives an RRC parameter, a precoding matrix for the PUSCH is determined based at least on the DCI and the RRC parameter, the precoding is performed based at least on the precoding matrix, and the RRC parameter is information for calculating the precoding matrix.

## Description

### Technical Field

The present invention relates to a terminal apparatus, a base station apparatus, and a communication method.

This application claims priority to JP 2022-61682 filed on April 1, 2022, the contents of which are incorporated herein by reference.

### Background Art

In the 3^{rd} Generation Partnership Project (3GPP), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.

The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.

In the 3GPP, extension of services supported by NR has been studied (NPL 2).

### Citation List

### Non Patent Literature

NPL 1: "New SID proposal: Study on New Radio Access Technology", RP-160671, NTT docomo, 3GPP TSG RAN Meeting #71, Goteborg, Sweden, 7th to 10th March, 2016.
NPL 2: "Release 17 package for RAN", RP-193216, RAN chairman, RAN1 chairman, RAN2 chairman, RAN3 chairman, 3GPP TSG RAN Meeting #86, Sitges, Spain, 9th to 12th December, 2019
NPL 3: "Release 18 package summary", RP-213469, RAN chairman, RAN1 chairman, RAN2 chairman, RAN3 chairman, 3GPP TSG RAN Meeting #94-e, 6th to 17th December, 2021

### Summary of Invention

### Technical Problem

The present invention provides a terminal apparatus that efficiently performs communication, a communication method used for the terminal apparatus, a base station apparatus that efficiently performs communication, and a communication method used for the base station apparatus.

### Solution to Problem

(1) A first aspect of the present invention is a terminal apparatus including a reception unit that receives a PDCCH in which DCI for scheduling a PUSCH is mapped, and a transmission unit that transmit the PUSCH, in which the transmission unit transmits capability information of a terminal, the capability information of the terminal is information indicating the number of first antenna ports of a first dimension and a second dimension, the reception unit receives an RRC parameter, a precoding matrix for the PUSCH is determined based at least on the DCI and the RRC parameter, the precoding is performed based at least on the precoding matrix, and the RRC parameter is information for calculating the precoding matrix.
(2) Furthermore, the capability information of the terminal is determined based on one or both of an antenna configuration and channel state information of the terminal apparatus.
(3) Furthermore, the information for calculating the precoding matrix is information indicating the number of second antenna ports of the first dimension and the second dimension. Alternatively, the information for calculating the precoding matrix is determined based on the channel state information.
(4) In addition, a second aspect of the present invention is a base station apparatus including a transmission unit configured to transmit a PDCCH in which DCI for scheduling a PUSCH is mapped, and a reception unit configured to receive the PUSCH, in which the reception unit receives capability information of a terminal, the capability information of the terminal is information indicating the number of first antenna ports of a first dimension and a second dimension, the transmission unit receives an RRC parameter for determining a codebook used in precoding for the PUSCH, ascertains that a precoding matrix for the PUSCH is determined based at least on the DCI and the RRC parameter, and ascertains that the precoding is performed based at least on the precoding matrix, and the RRC parameter is information for calculating the precoding matrix.
(5) Furthermore, the capability information of the terminal is determined based on one or both of an antenna configuration and channel state information of the terminal apparatus.
(6) Furthermore, the information for calculating the precoding matrix is information indicating the number of second antenna ports of the first dimension and the second dimension. Alternatively, the information for calculating the precoding matrix is determined based on the channel state information.
(7) In addition, a third aspect of the present invention is a communication method used in a terminal apparatus, including a step of receiving a PDCCH including DCI for scheduling a PUSCH, and a step of transmitting the PUSCH, in which capability information of a terminal is transmitted, the capability information of the terminal is information related to a capability of the terminal apparatus for determining a precoding matrix, an RRC parameter for determining a codebook used in precoding for the PUSCH is received, a precoding matrix is determined based at least on the DCI and the RRC parameter, and precoding for the PUSCH is performed based at least on the precoding matrix.
(8) Furthermore, the capability information of the terminal is determined based on one or both of an antenna configuration and channel state information of the terminal apparatus.
(9) Furthermore, information for calculating the precoding matrix is information indicating the number of second antenna ports of the first dimension and the second dimension. Alternatively, the information for calculating the precoding matrix is determined based on the channel state information.
(10) In addition, a fourth aspect of the present invention is a communication method used in a base station apparatus, including a step of transmitting a PDCCH including DCI for scheduling a PUSCH, and a step of receiving the PUSCH, in which capability information of a terminal is received, the capability information of the terminal is information related to a capability of a terminal apparatus for determining a precoding matrix, an RRC parameter for determining a codebook used in precoding for the PUSCH is transmitted, determination of a precoding matrix is ascertained based at least on the DCI and the RRC parameter, and performing precoding for the PUSCH is ascertained based at least on the precoding matrix.
(11) Furthermore, the capability information of the terminal is determined based on one or both of an antenna configuration and channel state information of the terminal apparatus.
(12) Furthermore, information for calculating the precoding matrix is information indicating the number of second antenna ports of the first dimension and the second dimension. Alternatively, the information for calculating the precoding matrix is determined based on the channel state information.

### Advantageous Effects of Invention

According to the present invention, the terminal apparatus can efficiently perform communication. In addition, the base station apparatus can efficiently perform communication.

### Brief Description of Drawings

FIG. 1 is a conceptual diagram of a radio communication system according to an aspect of the present embodiment.
FIG. 2 is an example illustrating a relationship between a subcarrier spacing configuration µ, the number of OFDM symbols per slot N^{slot}_{symb}, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating an example of a method of applying a precoding matrix according to an aspect of the present embodiment.

### Description of Embodiments

An embodiment of the present invention will be described below.

floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value out of J and K. Here, in a case that J and K are equal, max(J, K) is a function that outputs J or K. min(L, M) is a function that outputs a maximum value out of L and M. Here, in a case that L and M are equal, min(L, M) is a function that outputs L or M. round(N) is a function that outputs an integer value of a value closest to N. "·" represents multiplication.

In the radio communication system according to an aspect of the present embodiment, at least Orthogonal Frequency Division Multiplex (OFDM) is used. The OFDM symbol is a time domain unit of the OFDM. The OFDM symbol includes at least one or multiple subcarriers. The OFDM symbol is converted into a time-continuous signal in baseband signal generation. In downlink, at least Cyclic Prefix-Orthogonal Frequency Division Multiplex (CP-OFDM) is used. In uplink, either CP-OFDM or Discrete Fourier Transform-spread-Orthogonal Frequency Division Multiplex (DFT-s-OFDM) is used. DFT-s-OFDM may be given by applying Transform precoding to the CP-OFDM.

The OFDM symbol may be a term including a CP added to the OFDM symbol. That is, a certain OFDM symbol may include the certain OFDM symbol and the CP added to the certain OFDM symbol.

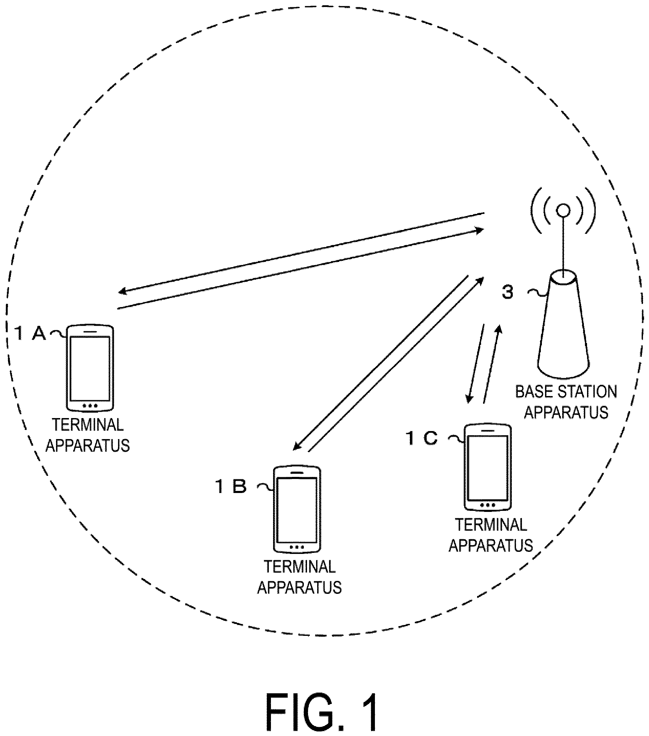

FIG. 1 is a conceptual diagram of a radio communication system according to an aspect of the present embodiment. In FIG. 1, the radio communication system includes at least terminal apparatuses 1A to 1C and a base station apparatus 3 (Base station #3 (BS #3)). Hereinafter, the terminal apparatuses 1A to 1C are also referred to as a terminal apparatus 1 (User Equipment #1 (UE #1)).

The base station apparatus 3 may include one or multiple transmission apparatuses (or transmission points, transmission and/or reception apparatuses, transmission and/or reception points). In a case that the base station apparatus 3 includes multiple transmission apparatuses, the multiple transmission apparatuses may be arranged at different positions.

The base station apparatus 3 may provide one or multiple serving cells. Each serving cell may be defined as a set of resources used for radio communication. In addition, the serving cell is also referred to as a cell.

The serving cell may include one or both of one downlink component carrier (downlink carrier) and one uplink component carrier (uplink carrier). The serving cell may include either or both of two or more downlink component carriers, and/or two or more uplink component carriers. The downlink component carrier and the uplink component carrier are also collectively referred to as a component carrier (carrier).

For example, for each component carrier, one resource grid may be given. In addition, for each set of one component carrier and a certain subcarrier spacing configuration µ, one resource grid may be given. Here, the subcarrier spacing configuration µ is also referred to as numerology. For example, for a set of a certain antenna port p, a certain subcarrier spacing configuration µ, and a certain transmission direction x, one resource grid may be given.

The resource grid includes N^{size, µ}_{grid, x}N^{RB}_{sc} subcarriers. Here, the resource grid starts from a common resource block N^{start, µ}_{grid, x}. In addition, the common resource block N^{start, µ}_{grid, x} is also referred to as a reference point of the resource grid.

The resource grid includes N^{subframe, µ}_{symb} OFDM symbols.

The subscript x added to the parameter associated with the resource grid indicates the transmission direction. For example, the subscript x may be used to indicate either of downlink or uplink.

N^{size, µ}_{grid, x} is an offset configuration indicated by a parameter provided by the RRC layer (e.g., parameter CarrierBandwidth). N^{start, µ}_{grid, x} is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) Δf for a certain subcarrier spacing configuration µ may be Δf satisfying Δf = 2^{µ} · 15 kHz. Here, the subcarrier spacing configuration µ may indicate one of 0, 1, 2, 3, or 4.

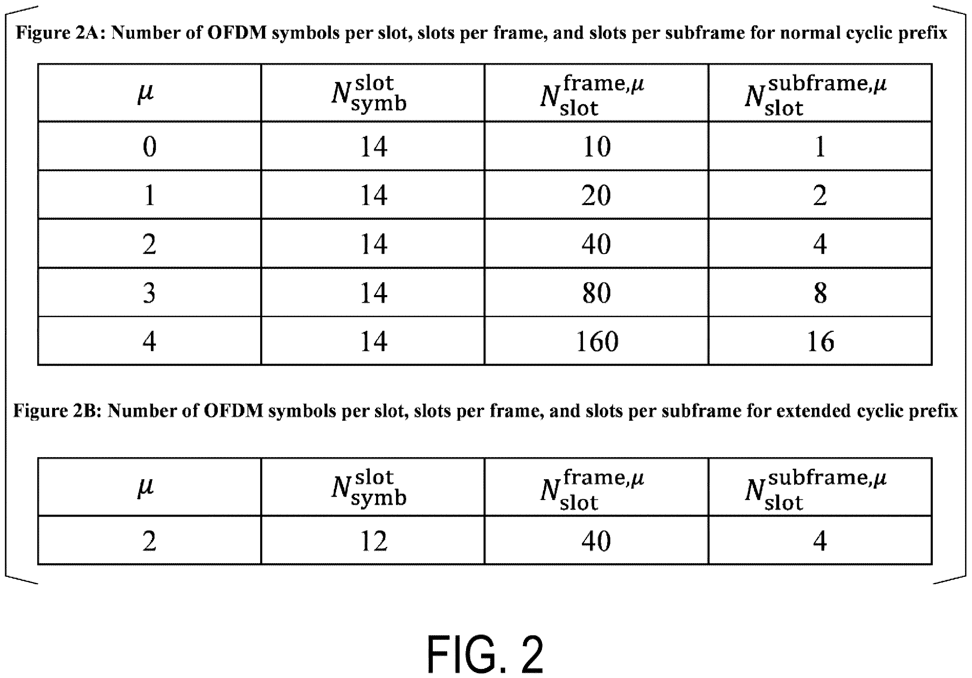

FIG. 2 is an example illustrating a relationship between the subcarrier spacing configuration µ, the number of OFDM symbols per slot N^{slot}_{symb}, and a cyclic Prefix (CP) configuration according to an aspect of the present embodiment. In FIG. 2A, for example, in a case that the subcarrier spacing configuration µ is 2 and the CP configuration is a normal cyclic prefix (normal CP), N^{slot}_{symb} = 14, N^{frame, µ}ₛₗₒₜ = 40, and N^{subframe, µ}ₛₗₒₜ = 4. In addition, in FIG. 2B, for example, in a case that the subcarrier spacing configuration µ is 2 and the CP configuration is an extended cyclic prefix (extended CP), N^{slot}_{symb} = 12, N^{frame, µ}ₛₗₒₜ = 40, and N^{subframe, µ}ₛₗₒₜ = 4.

The time unit T_{c} may be used to represent the length of the time domain. The time unit T_{c} is T_{c} = 1/(Δfₘₐₓ · N_{f}). Δfₘₐₓ = 480 kHz. N_{f} = 4096. A constant κ is κ = Δfₘₐₓ · N_{f}/(Δf_{ref}N_{f, ref}) = 64. Δf_{ref} is 15 kHz. N_{f, ref} is 2048.

Transmission of a signal in the downlink and/or transmission of a signal in the uplink may be organized into a radio frame (system frame, frame) having the length T_{f}. T_{f} = (ΔfₘₐₓN_{f}/100) · Tₛ = 10 ms. The radio frame includes 10 subframes. The length T_{sf} of the subframe is (ΔfₘₐₓN_{f}/1000) · Tₛ = 1 ms. The number of OFDM symbols per subframe is N^{subframe, µ}_{symb} = N^{slot}_{symb}N^{subframe, µ}ₛₗₒₜ.

The OFDM symbol is a time domain unit of one communication scheme. For example, the OFDM symbol may be a time domain unit of CP-OFDM. In addition, the OFDM symbol may be a time domain unit of DFT-s-OFDM.

The slot may include multiple OFDM symbols. For example, N^{slot}_{symb} continuous OFDM symbols may constitute one slot. For example, in a normal CP configuration, N^{slot}_{symb} may be 14. In addition, in an extended CP configuration, N^{slot}_{symb} may be 12.

For a certain subcarrier spacing configuration µ, the number and index of a slot included in the subframe may be given. For example, slot indices n^{µ}ₛ may be given in ascending order in the subframe with integer values within a range of 0 to N^{subframe, µ}ₛₗₒₜ - 1. For the subcarrier spacing configuration µ, the number and index of a slot included in the radio frame may be given. In addition, slot indices n^{µ}_{s, f} may be given in ascending order in the radio frame with integer values within a range of 0 to N^{frame, µ}ₛₗₒₜ - 1.

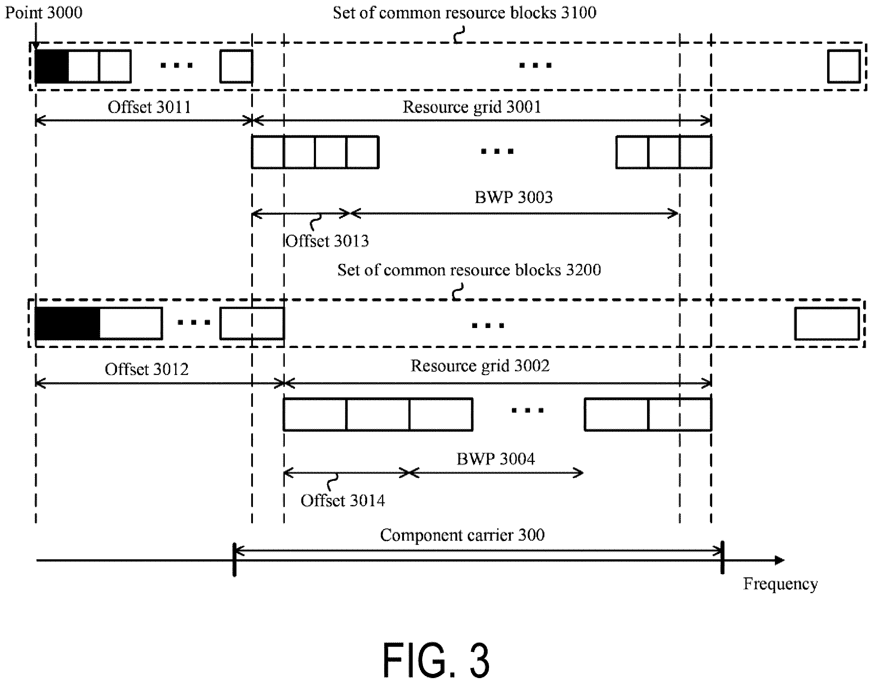

FIG. 3 is a diagram illustrating an example of a configuration method of a resource grid according to an aspect of the present embodiment. The horizontal axis of FIG. 3 represents a frequency domain. FIG. 3 illustrates a configuration example of a resource grid of a subcarrier spacing µ₁ in a component carrier 300, and a configuration example of a resource grid of a subcarrier spacing µ₂ in the certain component carrier. As described above, for a certain component carrier, one or multiple subcarrier spacings may be configured. In FIG. 3, it is assumed that µ₁ = µ₂ - 1, but various aspects of the present embodiment are not limited to the condition of µ₁ = µ₂ - 1.

The component carrier 300 is a band having a predetermined width in the frequency domain.

A point 3000 is an identifier for identifying a certain subcarrier. The point 3000 is also referred to as a point A. A common resource block (CRB) set 3100 is a set of common resource blocks for the configuration of the subcarrier spacing µ₁.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index 0 in the common resource block set 3100.

An offset 3011 is an offset from the reference point of the common resource block set 3100 to a reference point of a resource grid 3001. The offset 3011 is represented by the number of common resource blocks for the configuration of the subcarrier spacing µ₁. The resource grid 3001 includes N^{size, µ}_{grid1, x} common resource blocks starting from the reference point of the resource grid 3001.

An offset 3013 is an offset from the reference point of the resource grid 3001 to a reference point (N^{start, µ}_{BWP, i1}) of a bandwidth part (BWP) 3003 having an index i1.

A common resource block set 3200 is a set of common resource blocks for the configuration of the subcarrier spacing µ₂.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index 0 in the common resource block set 3200.

An offset 3012 is an offset from the reference point of the common resource block set 3200 to a reference point of a resource grid 3002. The offset 3012 is represented by the number of common resource blocks for the subcarrier spacing µ₂. The resource grid 3002 includes N^{size, µ}_{grid2, x} common resource blocks starting from the reference point of the resource grid 3002.

An offset 3014 is an offset from the reference point of the resource grid 3002 to a reference point (N^{start, µ}_{BWP, i2}) of a BWP 3004 having an index i2.

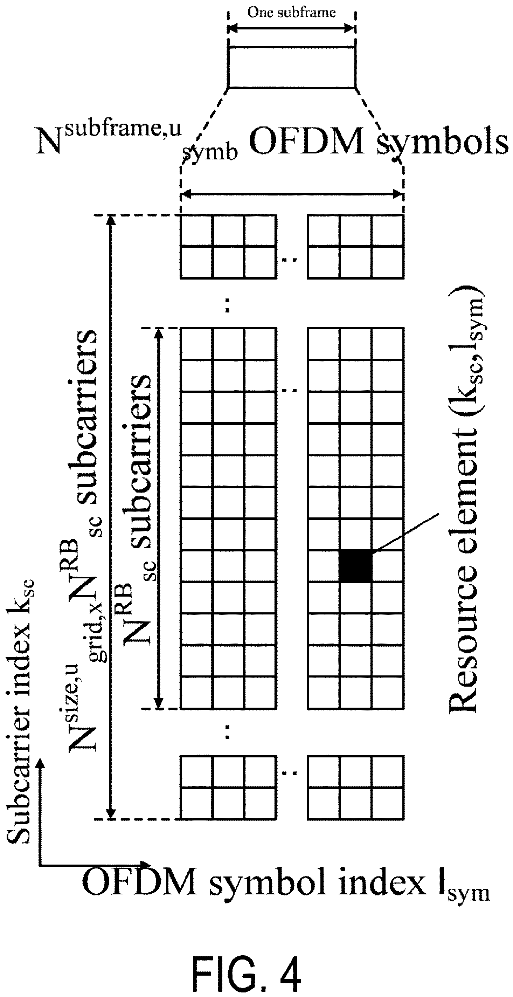

FIG. 4 is a diagram illustrating a configuration example of the resource grid 3001 according to an aspect of the present embodiment. In the resource grid of FIG. 4, the horizontal axis corresponds to an OFDM symbol index l_{sym}, and the vertical axis corresponds to a subcarrier index k_{sc}. The resource grid 3001 includes N^{size, µ}_{grid1, x}N^{RB}_{sc} subcarriers, and N^{subframe, µ}symb OFDM symbols. In the resource grid, a resource identified by the subcarrier index k_{sc} and the OFDM symbol index l_{sym} is also referred to as a resource element (RE).

The resource block (RB) includes N^{RB}_{sc} consecutive subcarriers. The resource block is a general term for a common resource block, a physical resource block (PRB), and a virtual resource block (VRB). Here, N^{RB}_{sc} is 12.

A resource block unit is a set of resources corresponding to one OFDM symbol in one resource block. That is, one resource block unit includes 12 resource elements corresponding to one OFDM symbol in one resource block.

The common resource blocks for the configuration of a certain subcarrier spacing µ are assigned indices (indexing) in ascending order from 0 in the frequency domain in a certain common resource block set. The common resource block having the index 0 for the configuration of a certain subcarrier spacing µ includes (collides with or matches) the point 3000. An index n^{µ}_{CRB} of the common resource block for the configuration of the certain subcarrier spacing µ satisfies the relationship of n^{µ}_{CRB} = ceil(k_{sc}/N^{RB}_{sc}). Here, a subcarrier with k_{sc} = 0 is a subcarrier having the same center frequency as the center frequency of a subcarrier corresponding to the point 3000.

Physical resource blocks for the configuration of the certain subcarrier spacing µ are assigned indices in ascending order from 0 in the frequency domain in a certain BWP. An index n^{µ}_{PRB} of the physical resource block for the configuration of the certain subcarrier spacing cµ satisfies the relationship of n^{µ}_{CRB} = n^{µ}_{PRB} + N^{start, µ}_{BWP, i}. Here, N^{start, µ}_{BWP, i} indicates a reference point of the BWP having an index i.

The BWP is defined as a subset of common resource blocks included in the resource grid. The BWP includes N^{size, µ}_{BWP, i} common resource blocks starting from the reference point N^{start, µ}_{BWP, i} of the BWP. A BWP configured for a downlink carrier is also referred to as a downlink BWP. A BWP configured for an uplink component carrier is also referred to as an uplink BWP.

An antenna port may be defined such that the channel over which a symbol on the antenna port is conveyed can be inferred from the channel over which another symbol on the same antenna port is conveyed. For example, the channel may correspond to a physical channel. In addition, the symbol may correspond to an OFDM symbol. In addition, the symbol may correspond to a resource block unit. In addition, the symbol may correspond to a resource element.

The fact that a large scale property of a channel over which a symbol on one antenna port is conveyed can be inferred from a channel over which a symbol on another antenna port is conveyed is referred to as the two antenna ports being quasi co-located (QCL). Here, the large scale property may include at least long term property of a channel. The large scale property may include at least a part or all of delay spread, Doppler spread, Doppler shift, an average gain, an average delay, and a beam parameter (spatial Rx parameters). The fact that the first antenna port and the second antenna port are QCL with respect to a beam parameter may mean that a reception beam assumed by a reception side for the first antenna port and a reception beam assumed by the reception unit side for the second antenna port are the same (or the reception beams correspond to each other). The fact that the first antenna port and the second antenna port are QCL with respect to a beam parameter may mean that a transmission beam assumed by a reception side for the first antenna port and a transmission beam assumed by the reception side for the second antenna port are the same (or the transmission beams correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL.

Carrier aggregation may mean that communication is performed by using multiple serving cells being aggregated. In addition, carrier aggregation may mean that communication is performed by using multiple component carriers being aggregated. In addition, carrier aggregation may mean that communication is performed by using multiple downlink component carriers being aggregated. In addition, carrier aggregation may mean that communication is performed by using multiple uplink component carriers being aggregated.

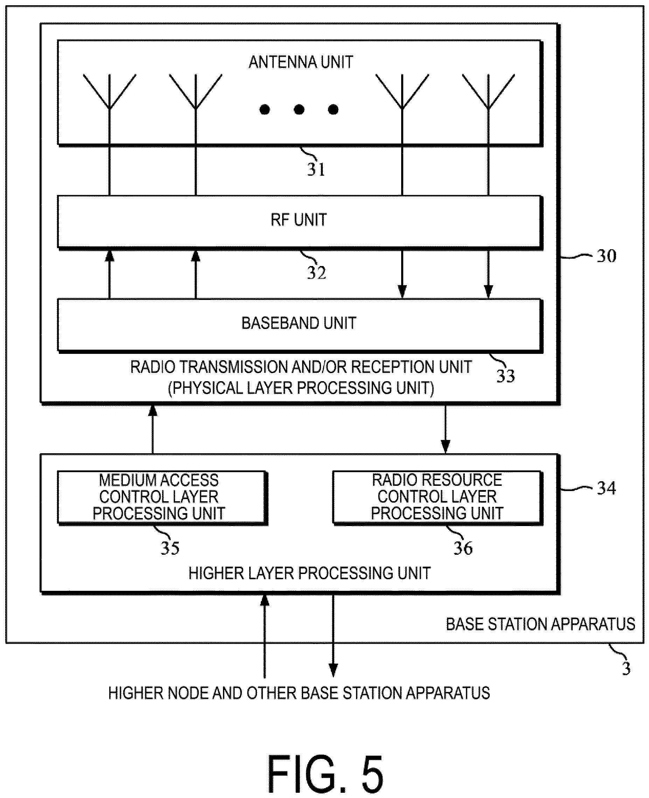

FIG. 5 is a schematic block diagram illustrating a configuration example of the base station apparatus 3 according to an aspect of the present embodiment. As illustrated in FIG. 5, the base station apparatus 3 includes at least a part or all of a radio transmission and/or reception unit (physical layer processing unit) 30 and/or a higher layer processing unit 34. The radio transmission and/or reception unit 30 includes at least a part or all of an antenna unit 31, a radio frequency (RF) unit 32, and a baseband unit 33. The higher layer processing unit 34 includes at least a part or all of a medium access control layer processing unit 35 and a radio resource control (RRC) layer processing unit 36.

The radio transmission and/or reception unit 30 includes at least a part or all of a radio transmission unit 30a and a radio reception unit 30b. Here, apparatus configurations of the baseband unit included in the radio transmission unit 30a and the baseband unit included in the radio reception unit 30b may be the same or different from each other. In addition, apparatus configurations of the RF unit included in the radio transmission unit 30a and the RF unit included in the radio reception unit 30b may be the same or different from each other. In addition, apparatus configurations of the antenna unit included in the radio transmission unit 30a and the antenna unit included in the radio reception unit 30b may be the same or different from each other.

For example, the radio transmission unit 30a may generate and transmit a baseband signal of a PDSCH. For example, the radio transmission unit 30a may generate and transmit a baseband signal of a PDCCH. For example, the radio transmission unit 30a may generate and transmit a baseband signal of a PBCH. For example, the radio transmission unit 30a may generate and transmit a baseband signal of a synchronization signal. For example, the radio transmission unit 30a may generate and transmit a baseband signal of a PDSCH DMRS. For example, the radio transmission unit 30a may generate and transmit a baseband signal of a PDCCH DMRS. For example, the radio transmission unit 30a may generate and transmit a baseband signal of a CSI-RS. For example, the radio transmission unit 30a may generate and transmit a baseband signal of a DL PTRS.

For example, the radio reception unit 30b may receive a PRACH. For example, the radio reception unit 30b may receive and demodulate a PUCCH. The radio reception unit 30b may receive and demodulate a PUSCH. For example, the radio reception unit 30b may receive a PUCCH DMRS. For example, the radio reception unit 30b may receive a PUSCH DMRS. For example, the radio reception unit 30b may receive a UL PTRS. For example, the radio reception unit 30b may receive an SRS.

The higher layer processing unit 34 outputs downlink data (a transport block) to the radio transmission and/or reception unit 30 (or the radio transmission unit 30a). The higher layer processing unit 34 performs processing operations of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets the parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes the received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down-converts) a signal received via the antenna unit 31 into a baseband signal by means of quadrature demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to a cyclic prefix (CP) from the converted digital signal, performs a Fast Fourier Transform (FFT) on the signal from which the CP has been removed, and extracts a signal in the frequency domain.

The baseband unit 33 performs Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, up-converts the analog signal into a signal having a carrier frequency, and transmits the signal via the antenna unit 31. In addition, the RF unit 32 may have a function of controlling transmission power. The RF unit 32 is also referred to as a transmission power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell).

The PCell is a serving cell included in a Master Cell Group (MCG). The PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

The SCell may be included in either of the MCG or the SCG.

A serving cell group (cell group) is a term at least including an MCG and an SCG. The serving cell group may include one or multiple serving cells (or component carriers). One or multiple serving cells (or component carriers) included in the serving cell group may be operated by means of carrier aggregation.

One or multiple downlink BWPs may be configured for each of the serving cells (or downlink component carriers). One or multiple uplink BWPs may be configured for each of the serving cells (or uplink component carriers).

Among one or multiple downlink BWPs configured for the serving cell (or the downlink component carrier), one downlink BWP may be configured as an active downlink BWP (or one downlink BWP may be activated). Among one or multiple uplink BWPs configured for the serving cell (or the uplink component carrier), one uplink BWP may be configured as an active uplink BWP (or one uplink BWP may be activated).

The PDSCH, the PDCCH, and the CSI-RS may be received in the active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as active BWPs.

The PDSCH, the PDCCH, and the CSI-RS need not be received in downlink BWPs (inactive downlink BWPs) other than the active downlink BWP. The terminal apparatus 1 need not attempt to receive the PDSCH, the PDCCH, and the CSI-RS in downlink BWPs that are not active downlink BWPs. The PUCCH and the PUSCH need not be transmitted in uplink BWPs (inactive uplink BWPs) that are not active uplink BWPs. The terminal apparatus 1 need not transmit the PUCCH and the PUSCH in uplink BWPs that are not active uplink BWPs. The inactive downlink BWPs and the inactive uplink BWPs are also collectively referred to as inactive BWPs.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs need not be configured for an active downlink BWP. For the serving cell, at certain times, one downlink BWP may be active.

Among one or multiple uplink BWPs configured for the serving cell, two or more uplink BWPs need not be configured for an active uplink BWP. For the serving cell, at certain times, one uplink BWP may be active.

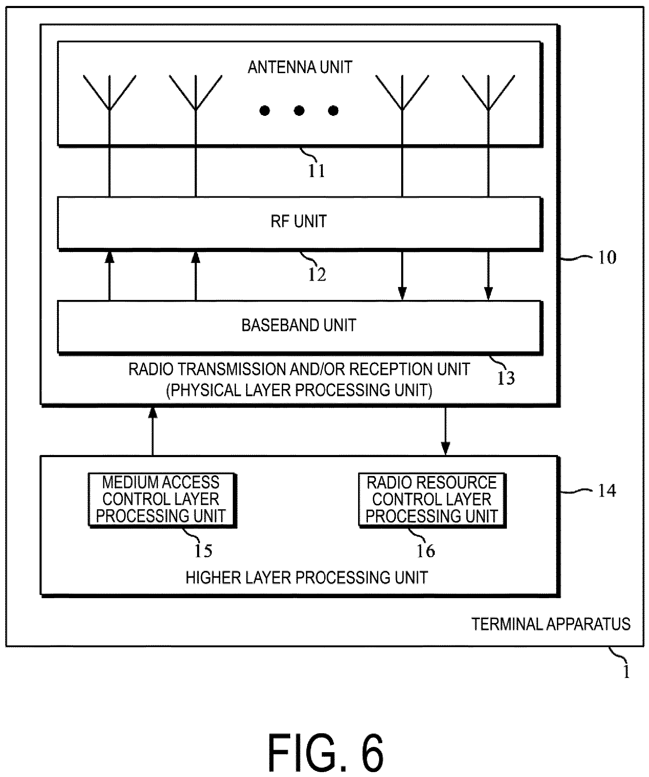

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least a part or all of an antenna unit 11, an RF unit 12, and a baseband unit 13. The higher layer processing unit 14 includes at least a part or all of a medium access control layer processing unit 15 and a radio resource control layer processing unit 16.

The radio transmission and/or reception unit 10 includes at least a part or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. In addition, apparatus configurations of the RF unit 12 included in the radio transmission unit 10a and the RF unit 12 included in the radio reception unit 10b may be the same or different from each other. In addition, apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of a PRACH. For example, the radio transmission unit 10a may generate and transmit a baseband signal of a PUCCH. The radio transmission unit 10a may generate and transmit a baseband signal of a PUSCH. For example, the radio transmission unit 10a may generate and transmit a baseband signal of a PUCCH DMRS. For example, the radio transmission unit 10a may generate and transmit a baseband signal of a PUSCH DMRS. For example, the radio transmission unit 10a may generate and transmit a baseband signal of a UL PTRS. For example, the radio transmission unit 10a may generate and transmit a baseband signal of an SRS. Generating the baseband signal of the SRS may be generating an SRS sequence.

For example, the radio reception unit 10b may receive and demodulate a PDSCH. For example, the radio reception unit 10b may receive and demodulate a PDCCH. For example, the radio reception unit 10b may receive and demodulate a PBCH. For example, the radio reception unit 10b may receive a synchronization signal. For example, the radio reception unit 10b may receive a PDSCH DMRS. For example, the radio reception unit 10b may receive a PDCCH DMRS. For example, the radio reception unit 10b may receive a CSI-RS. For example, the radio reception unit 10b may receive a DL PTRS.

The higher layer processing unit 14 outputs uplink data (a transport block) to the radio transmission and/or reception unit 10 (or the radio transmission unit 10a). The higher layer processing unit 14 performs processing operations of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into a time-continuous signal) on uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down-converts) a signal received via the antenna unit 11 into a baseband signal by means of quadrature demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to a cyclic prefix (CP) from the converted digital signal, performs a Fast Fourier Transform (FFT) on the signal from which the CP has been removed, and extracts a signal of the frequency domain.

The baseband unit 13 performs an Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, up-converts the analog signal into a signal having a carrier frequency, and transmits the signal via the antenna unit 11. In addition, the RF unit 12 may have a function of controlling transmission power. The RF unit 12 is also referred to as a transmission power control unit.

A physical signal (signal) will be described below.

A physical signal is a general term for a downlink physical channel, a downlink physical signal, an uplink physical channel, and an uplink physical channel. A physical channel is a general term for a downlink physical channel and an uplink physical channel. A physical signal is a general term for a downlink physical signal and an uplink physical signal.

An uplink physical channel may correspond to a set of resource elements for conveying information that is generated in a higher layer. An uplink physical channel may be a physical channel used in an uplink component carrier. An uplink physical channel may be transmitted by the terminal apparatus 1. The uplink physical channel may be received by the base station apparatus 3. In the radio communication system according to an aspect of the present embodiment, at least a part or all of the following uplink physical channels may be used:
- Physical Uplink Control CHannel (PUCCH);
- Physical Uplink Shared CHannel (PUSCH); and
- Physical Random Access CHannel (PRACH).

The PUCCH may be used to transmit Uplink Control Information (UCI). The PUCCH may be transmitted for conveying (delivering or transmitting) uplink control information. The uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, or uplink control information type) includes at least a part or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK corresponding to a transport block (TB). The HARQ-ACK may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include a HARQ-ACK codebook including one or multiple HARQ-ACK bits.

The transport block is a sequence of information bits delivered from a higher layer. Here, the sequence of information bits is also referred to as a bit sequence. Here, the transport block may be delivered through an uplink-shared channel (UL-SCH) of a transport layer.

A HARQ-ACK for the transport block may be referred to as a HARQ-ACK for a PDSCH. In this case, the "HARQ-ACK for the PDSCH" indicates a HARQ-ACK for a transport block included in a PDSCH.

The HARQ-ACK may indicate an ACK or a NACK corresponding to one code block group (CBG) included in the transport block.

A scheduling request may be at least used for requesting a resource of the UL-SCH for new transmission. A scheduling request bit may be used for indicating either of a positive SR or a negative SR. The scheduling request bit indicating the positive SR is also referred to as a "positive SR being conveyed". The positive SR may indicate that the terminal apparatus 1 requests resources of the UL-SCH for new transmission. The positive SR may indicate that a scheduling request is triggered by a higher layer. The positive SR may be conveyed in a case that the higher layer indicates the scheduling request. The scheduling request bit indicating the negative SR is also referred to as a "negative SR being transmitted". The negative SR may indicate that the terminal apparatus 1 requests no resources of the UL-SCH for new transmission. The negative SR may indicate that the scheduling request is not triggered by a higher layer. The negative SR may be conveyed in a case that the higher layer indicates no scheduling request.

Channel state information may include at least a part or all of a Channel Quality Indicator (CQI), a Precoder Matrix Indicator (PMI), and a Rank Indicator (RI). The CQI is an indicator related to the quality (for example, propagation strength) of a propagation path or the quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. A value of the channel state information may be determined by the terminal apparatus 1 based on the reception state assumed by a physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH may be transmitted in a certain PUCCH format. Note that the PUCCH format may be interpreted as a form of information. In addition, the PUCCH format may be interpreted as a set of information set in a certain form of information.

The PUSCH may be used for conveying one or both of a transport block and uplink control information. The transport block may be mapped to the PUSCH. The transport block delivered on the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence x_{u, v}(n) is defined by x_{u, v}(n) = xᵤ(mod(n + Cᵥ, L_{RA})). Here, xᵤ is a Zadoff Chu (ZC) sequence. In addition, xᵤ may be defined by xᵤ = exp(-jπui(i + 1)/L_{RA}). j is an imaginary unit. In addition, π is the ratio of the circumference of a circle to its diameter. In addition, Cᵥ corresponds to a cyclic shift of the PRACH sequence. In addition, L_{RA} corresponds to the length of the PRACH sequence. In addition, L_{RA} is 839, or 139. In addition, i is an integer in the range from 0 to L_{RA} - 1. In addition, u is a sequence index for the PRACH sequence.

For each PRACH occasion, 64 random access preambles are defined. The random access preambles are identified based on the cyclic shift Cᵥ of the PRACH sequence and the sequence index u for the PRACH sequence. Each of the 64 identified random access preambles may be assigned an index.

Uplink physical signals may correspond to a set of resource elements. The uplink physical signals need not be used to convey information generated in a higher layer. Note that the uplink physical signals may be used to convey information generated in the physical layer. The uplink physical signals may be physical signals used in an uplink component carrier. The terminal apparatus 1 may transmit the uplink physical signals. The base station apparatus 3 may receive the uplink physical signals. In the radio communication system according to an aspect of the present embodiment, at least a part or all of the following uplink physical signals may be used:
- UpLink Demodulation Reference Signal (UL DMRS);
- Sounding Reference Signal (SRS); and
- UpLink Phase Tracking Reference Signal (UL PTRS).

A UL DMRS is a general term for a DMRS for a PUSCH and a DMRS for a PUCCH.

A set of antenna ports of the DMRS for the PUSCH (the DMRS related to the PUSCH, the DMRS included in the PUSCH, or the DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) in one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (a DMRS related to the PUCCH, a DMRS included in the PUCCH, or a DMRS corresponding to the PUCCH) may be the same as a set of antenna ports of the PUCCH.

Transmission of the PUCCH and transmission of the DMRS for the PUCCH may be indicated (or may be triggered) in one DCI format. One or both of resource element mapping of the PUCCH and resource element mapping of the DMRS for the PUCCH may be given in one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

A downlink physical channel may correspond to a set of resource elements for conveying information generated in a higher layer. A downlink physical channel may be a physical channel used in a downlink component carrier. The base station apparatus 3 may transmit a downlink physical channel. The terminal apparatus 1 may receive a downlink physical channel. In the radio communication system according to an aspect of the present embodiment, at least a part or all of the following downlink physical channels may be used:
- Physical Broadcast Channel (PBCH);
- Physical Downlink Control Channel (PDCCH); and
- Physical Downlink Shared Channel (PDSCH).

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to a BCH that is a channel of a transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may include 8 bits. The physical layer control information may include at least a part or all of the following 0A to 0D. 0A) Radio frame bit, 0B) half radio frame (half system frame or half frame) bit, 0C) SS/PBCH block index bit, 0D) subcarrier offset bit.

The radio frame bit is used for indicating a radio frame in which the PBCH is transmitted (radio frame including a slot in which the PBCH is transmitted). The radio frame bit includes 4 bits. The radio frame bit may include 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. In addition, the half radio frame may include the first five subframes out of the 10 subframes included in the radio frame. In addition, the half radio frame may include the last five subframes out of the 10 subframes included in the radio frame.

An SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks of the index 0 to index 63.

A subcarrier offset bit is used for indicating a subcarrier offset. The subcarrier offset may be used for indicating a difference between the leading subcarrier to which the PBCH is mapped and the leading subcarrier to which the control resource set having the index 0 is mapped.

The PDCCH may be transmitted for transmitting Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted in a DCI format. Note that the DCI format may also be interpreted to be in the format of downlink control information. In addition, the DCI format may be interpreted as a set of downlink control information set to the format of certain downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least a part or all of fields listed from 1A to 1E.
1A) Identifier field for DCI formats
1B) Frequency domain resource assignment field
1C) Time domain resource assignment field
1D) Frequency hopping flag field
1E) Modulation and Coding Scheme (MCS) field

An identifier field for DCI formats may indicate whether the DCI format including the identifier field for DCI formats is an uplink DCI format or a downlink DCI format. In other words, an identifier field for DCI formats may be included in each of the uplink DCI format and the downlink DCI format. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target encoding rate may be a target encoding rate for the transport block mapped to the PUSCH. A transport block size (TBS) mapped to the PUSCH may be determined based on one or both of the target encoding rate and the modulation scheme for the PUSCH.

The DCI format 0_0 need not include a field used for a CSI request.

The DCI format 0_0 need not include a carrier indicator field. In other words, the serving cell to which the uplink component carrier to which the PUSCH scheduled in the DCI format 0_0 is mapped belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled in the DCI format 0_0 is mapped to the uplink component carrier of the certain serving cell.

The DCI format 0_0 need not include a BWP field. Here, the DCI format 0_0 may be a DCI format for scheduling the PUSCH without changing an active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH mapped to a certain cell. The DCI format 0_1 includes at least a part or all of fields listed from 2A to 2H.
2A) Identifier field for DCI formats
2B) Frequency domain resource assignment field
2C) Uplink time domain resource assignment field
2D) Frequency hopping flag field
2E) MCS field
2F) CSI request field
2G) BWP field
2H) Carrier indicator field

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating a part or all of a modulation scheme for the PUSCH and/or a target encoding rate.

The BWP field of the DCI format 0_1 may be used for indicating an uplink BWP to which the PUSCH scheduled in the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case that the terminal apparatus 1 supports the function of switching the BWP, the terminal apparatus 1 may report, in a function information reporting procedure of the RRC layer, that "the terminal apparatus 1 supports the function of switching the BWP".

The CSI request field is used for indicating a report of CSI.

In a case that a carrier indicator field is included in the DCI format 0_1, the carrier indicator field may be used for indicating the uplink component carrier to which the PUSCH is mapped. In a case that a carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (a case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is one (a case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field may not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least a part or all of 3A to 3F:
3A) Identifier field for DCI formats;
3B) Frequency domain resource assignment field;
3C) Time domain resource assignment field;
3D) MCS field;
3E) PDSCH_HARQ feedback timing indicator field (PDSCH to HARQ feedback timing indicator field); and
3F) PUCCH resource indicator field.

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target encoding rate may be a target encoding rate for a transport block mapped to the PDSCH. The size of a transport block (Transport Block Size or TBS) mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 may not include the carrier indicator field. In other words, the downlink component carrier to which the PDSCH scheduled by using the DCI format 1_0 is mapped may be the same as the downlink component carrier to which the PDCCH including the DCI format 1_0 is mapped. Based on detection of the DCI format 1_0 on a certain downlink component carrier, the terminal apparatus 1 may recognize that the PDSCH scheduled in the DCI format 1_0 is mapped to the downlink component carrier.

The DCI format 1_0 may not include a BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in scheduling of the PDSCH.

The DCI format 1_1 is at least used for scheduling of the PDSCH mapped to a certain cell. The DCI format 1_1 includes at least some or all of 4A to 4I:
4A) Identifier field for DCI formats;
4B) Frequency domain resource assignment field;
4C) Time domain resource assignment field;
4E) MCS field;
4F) PDSCH_HARQ feedback timing indicator field;
4G) PUCCH resource indicator field;
4H) BWP field; and
4I) Carrier indicator field.

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH_HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled in the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and the DCI format 1_1 not including the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is used for the scheduling of the PDSCH and the DCI format 1_1 including the BWP field. Here, in a case that the terminal apparatus 1 supports the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (a case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (a case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field may not be included in the DCI format 1_1 used for scheduling of the PDSCH mapped to the certain serving cell group).

The PDSCH may be transmitted for conveying a transport block. The PDSCH may be used for transmitting a transport block delivered on the DL-SCH. The PDSCH may be used for conveying a transport block. A transport block may be mapped to the PDSCH. The transport block corresponding to the DL-SCH may be mapped to the PDSCH. The base station apparatus 3 may transmit the PDSCH. The terminal apparatus 1 may receive the PDSCH.

A downlink physical signal may correspond to a set of resource elements. The downlink physical signal may not carry information generated in a higher layer. The downlink physical signal may be a physical signal used in a downlink component carrier. The downlink physical signal may be transmitted by the base station apparatus 3. The downlink physical signal may be transmitted by the terminal apparatus 1. In the radio communication system according to an aspect of the present embodiment, at least some or all of the following downlink physical signals may be used:
- Synchronization signal (SS);
- DownLink DeModulation Reference Signal (DL DMRS);
- Channel State Information-Reference Signal (CSI-RS); and
- DownLink Phase Tracking Reference Signal (DL PTRS).

The synchronization signal may be used for the terminal apparatus 1 to take synchronization in one or both of the frequency domain and the time domain in downlink. The synchronization signal is a general term for a primary synchronization signal (PSS) and a secondary synchronization signal (SSS).

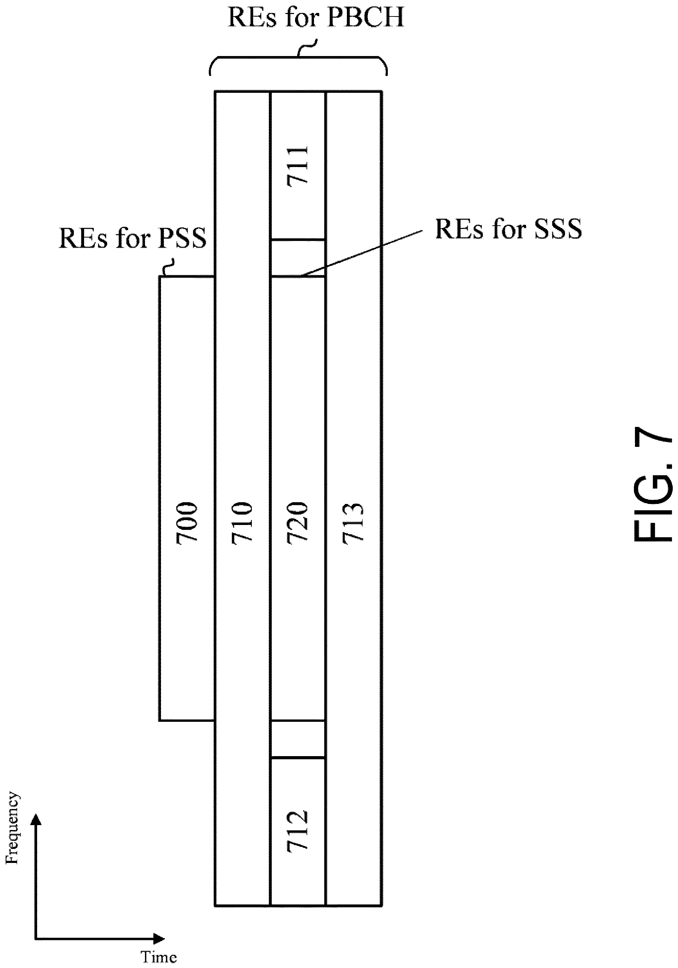

FIG. 7 is a diagram illustrating a configuration example of the SS/PBCH block according to an aspect of the present embodiment. In FIG. 7, the horizontal axis corresponds to a time axis (OFDM symbol index l_{sym}), and the vertical axis represents the frequency domain. In addition, a block 700 represents a set of resource elements for a PSS. In addition, a block 720 represents a set of resource elements for an SSS. In addition, four blocks (blocks 710, 711, 712, and 713) represent a set of resource elements for a PBCH and a DMRS for the PBCH (DMRS related to the PBCH, DMRS included in the PBCH, or DMRS corresponding to the PBCH).

As illustrated in FIG. 7, the SS/PBCH block includes a PSS, an SSS, and a PBCH. In addition, the SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which a DMRS for the PBCH is not mapped. The PBCH is mapped to subcarriers which are the 1st to 48th subcarriers of the third OFDM symbol and to which a DMRS for the PBCH is not mapped. The PBCH is mapped to subcarriers which are the 193rd to 240th subcarriers of the third OFDM symbol and to which ae DMRS for the PBCH is not mapped. The PBCH is mapped to subcarriers which are the 1st to 240th subcarriers of the fourth OFDM symbol and to which a DMRS for the PBCH is not mapped.

The antenna ports of the PSS, the SSS, the PBCH, and the DMRS for the PBCH may be the same.

The PBCH over which the symbol of the PBCH on a certain antenna port is conveyed may be inferred from the DMRS for the PBCH mapped to the slot to which the PBCH is mapped and the DMRS for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (a DMRS related to the PDSCH, a DMRS included in the PDSCH, or a DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) in one DCI format. The PDSCH and the DMRS for the PDSCH may be collectively referred to as a PDSCH. Transmission of the PDSCH may be transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same precoding resource group (PRG), the PDSCH over which the symbol of the PDSCH on a certain antenna port is conveyed may be inferred from the DMRS for the PDSCH.

The antenna port of the DMRS for the PDCCH (the DMRS related to the PDCCH, the DMRS included in the PDCCH, or the DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is applied to (assumed to be applied to) a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

A BCH of the transport layer is mapped to the PBCH of the physical layer. In other words, a transport block passing through the BCH of the transport layer is delivered to the PBCH of the physical layer. In addition, the UL-SCH of the transport layer is mapped to the PUSCH of the physical layer. In other words, the transport block passing through the UL-SCH of the transport layer is delivered to the PUSCH of the physical layer. In addition, the DL-SCH of the transport layer is mapped to the PDSCH of the physical layer. In other words, a transport block passing through the DL-SCH of the transport layer is delivered to the PDSCH of the physical layer.

One UL-SCH and one DL-SCH may be given to each serving cell. The BCH may be given to a PCell. The BCH may not be given to a PSCell and an SCell.

In the MAC layer, control over a Hybrid Automatic Repeat reQuest (HARQ) is performed for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting a MIB or system information. In addition, a Common Control CHannel (CCCH) may be used for transmitting a common RRC message in multiple terminal apparatuses 1. Here, the CCCH may be, for example, used for a terminal apparatus 1 that is not in a state of RRC connection. In addition, a Dedicated Control CHannel (DCCH) may be at least used for transmitting an RRC message dedicated to a terminal apparatus 1. Here, the DCCH may be, for example, used for the terminal apparatus 1 that is in a state of RRC connection.

A higher layer parameter common to multiple terminal apparatuses 1 is also referred to as a common higher layer parameter. Here, the common higher layer parameter may be defined as a parameter specific to a serving cell. Here, a parameter specific to a serving cell may be a parameter common to terminal apparatuses configured with the serving cell (for example, terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter can provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including information of an MIB is delivered to the BCH of the transport layer. In addition, a transport block including system information other than the MIB is delivered to the DL-SCH of the transport layer. In addition, the CCCH is mapped to the DL-SCH or the UL-SCH. In other words, a transport block mapped to the CCCH is delivered to the DL-SCH or the UL-SCH. In addition, the DCCH is mapped to the DL-SCH or the UL-SCH. In other words, a transport block mapped to the DCCH is delivered to the DL-SCH or the UL-SCH.

An RRC message includes one or multiple parameters managed in the RRC layer. Here, the parameters managed in the RRC layer are also referred to as RRC parameters. For example, the RRC message may include the MIB. In addition, the RRC message may include system information. In addition, the RRC message may include a message corresponding to the CCCH. In addition, the RRC message may include a message corresponding to the DCCH. An RRC message including a message corresponding to the DCCH is also referred to as an individual RRC message.

A higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and a parameter included in a MAC CE. The parameter included in the MAC CE is transmitted by using a MAC Control Element (CE) command.

Procedures performed by the terminal apparatus 1 include at least some or all of the following 5A to 5C:
5A) Cell search;
5B) Random access; and
5C) Data communication

The cell search is a procedure used for the terminal apparatus 1 synchronizing with a certain cell related to the time domain and the frequency domain and detecting a physical cell identity (physical cell ID). In other words, by means of the cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices at prescribed intervals. The terminal apparatus 1 may detect at least one SS/PBCH block out of the SS/PBCH blocks with one or multiple indices and attempt decoding of the PBCH included in the SS/PBCH block.

The random access is a procedure including at least some or all of a message 1, a message 2, a message 3, and a message 4.

The message 1 is a procedure in which the PRACH is transmitted by the terminal apparatus 1. The terminal apparatus 1 transmits the PRACH in one PRACH occasion selected out of one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected out of the PRACH occasions corresponding to the indices of the SS/PBCH block candidates in which the SS/PBCH block is detected.

The message 2 is a procedure of attempting to detect a DCI format 1_0 with a Cyclic Redundancy Check (CRC) scrambled by a Random Access-Radio Network Temporary Identifier (RA-RNTI) by the terminal apparatus 1. The terminal apparatus 1 attempts detection of the PDCCH including the DCI format in a control resource set given based on the MIB, which is included in the PBCH included in the SS/PBCH block detected based on a cell search, and in resources indicated based on a configuration of a search space set. The message 2 is also referred to as a random access response.

The message 3 is a procedure of transmitting the PUSCH scheduled by using a random access response grant included in the DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (contention resolution ID) MAC CE. The contention resolution ID MAC CE includes a contention resolution ID.

Retransmission of the message 3 PUSCH is scheduled by using the DCI format 0_0 with a CRC scrambled based on a Temporary Cell-Radio Network Temporary Identifier (TC-RNTI).

The message 4 is a procedure of attempting to detect the DCI format 1_0 with a CRC scrambled based on either of a Cell-Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH or supervises the PDCCH) in a control resource set and resources identified based on a search space set.

The control resource set is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by a higher layer parameter. The number of OFDM symbols constituting the control resource set may be indicated by a higher layer parameter.

The terminal apparatus 1 attempts detection of the PDCCH in a search space set. Here, an attempt to detect the PDCCH in the search space set may be an attempt to detect a candidate of the PDCCH in the search space set, may be an attempt to detect a DCI format in the search space set, may be an attempt to detect the PDCCH in the control resource set, may be an attempt to detect a candidate of the PDCCH in the control resource set, or may be an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in some or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having the index 0. The Type 0 PDCCH common search space set may be a common search space set having the index 0.

A CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. A USS set is also referred to as a UE-specific PDCCH search space set.

A certain search space set is related to (included in or corresponds to) a certain control resource set. The index of the control resource set related to the search space set may be indicated by a higher layer parameter.

For a certain search space set, some or all of 6A to 6C may be indicated by at least a higher layer parameter:
6A) PDCCH monitoring periodicity;
6B) PDCCH monitoring pattern within a slot; and
6C) PDCCH monitoring offset.

The monitoring occasion of a certain search space set may correspond to the OFDM symbol to which the first OFDM symbol of a control resource set related to the certain search space set is mapped. The monitoring occasion of a certain search space set may correspond to a resource of a control resource set starting from the first OFDM symbol of the control resource set related to the certain search space set. The monitoring occasion of the search space set is given based at least on some or all of the monitoring periodicity of the PDCCH, the monitoring pattern of the PDCCH in a slot, and a monitoring offset of the PDCCH.

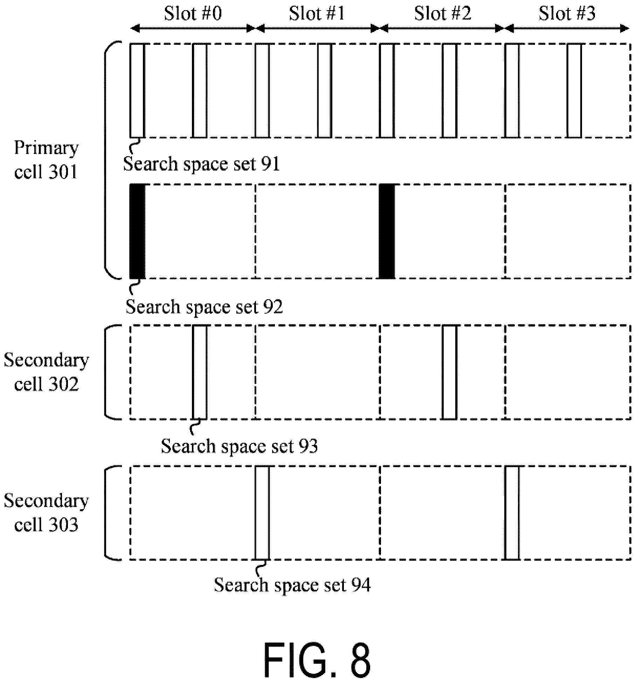

FIG. 8 is a diagram illustrating an example of the monitoring occasions for the search space sets according to an aspect of the present embodiment. In FIG. 8, search space sets 91 and search space sets 92 are configured in a primary cell 301, search space sets 93 are configured in a secondary cell 302, and search space sets 94 are configured in a secondary cell 303.

In FIG. 8, solid white blocks in the primary cell 301 represent the search space sets 91, solid black blocks in the primary cell 301 represent the search space sets 92, blocks in the secondary cell 302 represent the search space sets 93, and blocks in the secondary cell 303 represent the search space sets 94.

The monitoring periodicity of the search space sets 91 is set to one slot, the monitoring offset of the search space sets 91 is set to zero slots, and the monitoring pattern of the search space sets 91 is set to [1, 0, 0, 0, 0, 0, 0, 1, 0, 0, 0, 0, 0, 0]. In other words, the monitoring occasions for the search space sets 91 correspond to the first OFDM symbol (OFDM symbol #0) and the 8th OFDM symbol (OFDM symbol #7) in each of the slots.

The monitoring periodicity of the search space sets 92 is set to two slots, the monitoring offset of the search space sets 92 is set to zero slots, and the monitoring pattern of the search space sets 92 is set to [1, 0, 0, 0, 0, 0, 0, 0, 0, 0, 0, 0, 0, 0]. In other words, the monitoring occasion for the search space sets 92 corresponds to the first OFDM symbol (OFDM symbol #0) in each of the even-numbered slots.

The monitoring periodicity of the search space sets 93 is set to two slots, the monitoring offset of the search space sets 93 is set to zero slots, and the monitoring pattern of the search space sets 93 is set to [0, 0, 0, 0, 0, 0, 0, 1, 0, 0, 0, 0, 0, 0]. In other words, the monitoring occasion for the search space sets 93 corresponds to the 8th OFDM symbol (OFDM symbol #7) in each of the even-numbered slots.

The monitoring periodicity of the search space sets 94 is set to two slots, the monitoring offset of the search space sets 94 is set to one slot, and the monitoring pattern of the search space sets 94 is set to [1, 0, 0, 0, 0, 0, 0, 0, 0, 0, 0, 0, 0, 0]. In other words, the monitoring occasion for the search space sets 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio Network Temporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by C-RNTI.

In downlink communication, the terminal apparatus 1 detects a downlink DCI format. The detected downlink DCI format is at least used for resource assignment of the PDSCH. The detected downlink DCI format is also referred to as downlink assignment. The terminal apparatus 1 attempts reception of the PDSCH. A HARQ-ACK corresponding to the PDSCH (HARQ-ACK corresponding to the transport block included in the PDSCH) is reported to the base station apparatus 3 based on PUCCH resources indicated based on the detected downlink DCI format.

In uplink communication, the terminal apparatus 1 detects an uplink DCI format. The detected DCI format is at least used for resource assignment of the PUSCH. The detected uplink DCI format is also referred to as an uplink grant. The terminal apparatus 1 performs transmission of the PUSCH.

In configured grant, the uplink grant for scheduling the PUSCH is configured for each transmission periodicity of the PUSCH. A part or all of pieces of information indicated by an uplink DCI format in a case that the PUSCH is scheduled by the uplink DCI format may be indicated by the uplink grant configured in a case of the configured scheduling.

A UL slot may be a slot including a UL symbol. A special slot may be a slot including a UL symbol, a flexible symbol, and a DL symbol. A DL slot may be a slot including a DL symbol.

The UL symbol may be an OFDM symbol configured or indicated for uplink in time division duplex. The UL symbol may be an OFDM symbol configured or indicated for the PUSCH, the PUCCH, the PRACH, or the SRS. The UL symbol may be provided by a higher layer parameter tdd-UL-DL-ConfigurationCommon. The UL symbol may be provided by a higher layer parameter tdd-UL-DL-ConfigurationDedicated. The UL slot may be provided by the higher layer parameter tdd-UL-DL-ConfigurationCommon. The UL slot may be provided by the higher layer parameter tdd-UL-DL-ConfigurationDedicated.

The DL symbol may be an OFDM symbol configured or indicated for downlink in time division duplex. The DL symbol may be an OFDM symbol configured or indicated for the PDSCH or the PDCCH. The DL symbol may be provided by the higher layer parameter tdd-UL-DL-ConfigurationCommon. The DL symbol may be provided by the higher layer parameter tdd-UL-DL-ConfigurationDedicated. The DL slot may be provided by the higher layer parameter tdd-UL-DL-ConfigurationCommon. The DL slot may be provided by the higher layer parameter tdd-UL-DL-ConfigurationDedicated.

The flexible symbol may be an OFDM symbol that is not configured or indicated as a UL symbol or a DL symbol among the OFDM symbols within a certain periodicity. The certain periodicity may be a periodicity given by a higher layer parameter dl-UL-TransmissionPeriodicity. The flexible symbol may be an OFDM symbol configured or indicated for the PDSCH, the PDCCH, the PUSCH, the PUCCH, or the PRACH.

The higher layer parameter tdd-UL-DL-ConfigurationCommon may be a parameter for configuring one of a UL slot, a DL slot, and a special slot for each of one or multiple slots. The higher layer parameter tdd-UL-DL-ConfigurationDedicated may be a parameter for configuring any one of a UL symbol, a DL symbol, and a flexible symbol for a flexible symbol in each of the one or multiple slots. tdd-UL-DL-ConfigurationCommon may be a common higher layer parameter. tdd-UL-DL-ConfigurationDedicated may be a dedicated higher layer parameter.

PUSCH-Config may be a dedicated higher layer parameter. PUSCH-ConfigCommon may be a common higher layer parameter. PUSCH-Config may be configured per BWP for PUSCH transmission. PUSCH-Config may include multiple higher layer parameters related to PUSCH transmission. PUSCH-Config may be a UE-specific configuration. For example, PUSCH-Config for the terminal apparatus 1A, the terminal apparatus 1B, and the terminal apparatus 1C in one cell, or multiple higher layer parameters included in PUSCH-Config may vary. PUSCH-ConfigCommon may be configured per BWP for PUSCH transmission. PUSCH-ConfigCommon may include multiple higher layer parameters related to PUSCH transmission. PUSCH-ConfigCommon may be a cell-specific configuration. For example, PUSCH-ConfigCommon for the terminal apparatus 1A, the terminal apparatus 1B, and the terminal apparatus 1C in one cell may be common. For example, PUSCH-ConfigCommon may be provided in system information.

Repetitive transmission may be applied to the PUSCH. For example, repetitive transmission may be applied to the PUSCH scheduled by the DCI. In addition, repetitive transmission may be applied to the PUSCH scheduled by a configured uplink grant. A PUSCH repetition type may be one of a PUSCH repetition type A and a PUSCH repetition type B. The PUSCH repetition type may be configured by a higher layer parameter. The PUSCH repetition type may be based on a DCI format. For example, the first PUSCH repetition type for the PUSCH scheduled in the DCI format 0_1 may be different from the second PUSCH repetition type for the PUSCH scheduled in the DCI format 0_2.

The number of repetitions for PUSCH repetitive transmission may be configured by a higher layer parameter. For example, the higher layer parameter numberOfRepetitioins may be a parameter including the number of repetitions for the PUSCH repetitive transmission. For the PUSCH repetitive transmission corresponding to the PUSCH repetition type A, the number of repetitions for the PUSCH repetitive transmission may be determined based on the value of the higher layer parameter numberOfRepetitions. In the PUSCH repetition type A, in a case that the resource assignment table includes numberOfRepetitions for the PUSCH on which transmission is indicated by the DCI format with the CRC scrambled by any one of C-RNTI, MCS-C-RNTI, and CS-RNTI, the number of repetitions may be equal to numberOfRepetitions. In a case that one PUSCH-TimeDomainResourceAllocation includes one or multiple PUSCH-Allocations, the higher layer parameter numberOfRepetitions may be configured for each PUSCH-Allocation. In addition, PUSCH-TimeDomainResourceAllocation may be referred to as a resource assignment table.

The higher layer parameter pusch-AggregationFactor may be a parameter indicating the number of repetitions for PUSCH repetitive transmission. In the PUSCH repetitive transmission corresponding to the PUSCH repetition type A, the number of repetitions for the PUSCH repetitive transmission may be determined based on the value of the higher layer parameter pusch-AggregationFactor. In the PUSCH repetition type A, in a case that pusch-AggregationFactor is configured for the PUSCH on which transmission is indicated by the DCI format with the CRC scrambled by any one of C-RNTI, MCS-C-RNTI, and CS-RNTI, the number of repetitions may be equal to pusch-AggregationFactor. pusch-AggregationFactor may be configured for PUSCH-Config.

The number of repetitions corresponding to the PUSCH repetition type A may be the number of slots for PUSCH repetitive transmission. In addition, one TB may be repeated in one or multiple slots. Assignment of the same OFDM symbol may be applied to PUSCH repetitions transmitted in different slots.

The PUSCH repetitive transmission corresponding to the PUSCH repetition type B may be based on a nominal repetition and an actual repetition.

A frequency hopping scheme may be configured by a higher layer parameter. The higher layer parameters frequencyHopping, frequencyHoppingDCI-0-1, and frequencyHoppingDCI-0-2 may be parameters providing frequency hopping schemes for the PUSCH. For example, the frequency hopping scheme corresponding to the frequency hopping for the PUSCH may be configured by frequencyHoppingDCI-0-2 in PUSCH-Config. In addition, the frequency hopping scheme corresponding to the frequency hopping for the PUSCH may be configured by frequencyHopping in PUSCH-Config. In addition, the frequency hopping scheme corresponding to the frequency hopping for PUSCH transmission configured by frequencyHopping in configuredGrantConfig may be configured. The frequency hopping scheme may be any one of intra-slot frequency hopping, inter-slot frequency hopping, and inter-repetition frequency hopping. In addition, the frequency hopping interval corresponding to intra-slot frequency hopping may be one slot or less. The frequency hopping interval corresponding to inter-slot frequency hopping may be one slot or multiple slots. The frequency hopping interval corresponding to inter-repetition frequency hopping may be based on the nominal repetition.

For example, the hopping interval may be provided by a higher layer parameter. For example, the higher layer parameter may be a dedicated higher layer parameter.

Whether to perform frequency hopping may be determined based at least on DCI. Whether to apply frequency hopping for the PUSCH on which transmission is indicated by the DCI format may be determined based at least on the value of a frequency hopping flag field included in the DCI format. Whether to apply frequency hopping for the PUSCH on which transmission is indicated by a random access response grant may be determined based at least on the value of the frequency hopping flag field included in the random access response grant. For example, the frequency hopping for the PUSCH may be performed based at least on the value of the frequency hopping flag field being 1.

The intra-slot frequency hopping may be applied to PUSCH transmission in one or multiple slots. For example, the intra-slot frequency hopping may be applied to PUSCH repetitive transmission. For the PUSCH to which the intra-slot frequency hopping is applied, mapping may be switched for every one or multiple OFDM symbols. For example, for the PUSCH to which the intra-slot frequency hopping is applied, switching may be performed for every one or multiple OFDM symbols to determine whether mapping of a resource block corresponds to a first hop or a second hop. In addition, in a case that intra-slot frequency hopping is performed for the PUSCH, switching between the first hop and the second hop may be performed for every one or multiple OFDM symbols. RB_{offset} may be a difference of between the position in the first resource block of the first hop and the position of the first resource block in the second hop. RB_{offset} may be configured by a higher layer parameter. The one or multiple OFDM symbols may be one slot or less. The one or multiple OFDM symbols may be half the number of OFDM symbols for the PUSCH in one slot. The intra-slot frequency hopping may be applied to the PUSCH corresponding to the PUSCH repetition type A.

The inter-slot frequency hopping may be applied to PUSCH transmission in multiple slots. For the PUSCH to which inter-slot frequency hopping is applied, mapping of resource blocks may be switched for each slot. For example, inter-slot frequency hopping may be applied to the PUSCH repetitive transmission. In addition, in a case that inter-slot frequency hopping is performed for the PUSCH, switching may be performed for every slot to determine whether the mapping of the resource blocks corresponds to the first hop or the second hop. For example, in a case that a certain slot has a slot index n^{µ}_{s, f} that is even-numbered, PUSCH transmission in the slot may correspond to the first hop. For example, in a case that a certain slot has a slot index n^{µ}_{s, f} that is odd-numbered, PUSCH transmission in the slot may correspond to the second hop. Inter-slot frequency hopping may be applied to the PUSCH corresponding to either of the PUSCH repetition type A and the PUSCH repetition type B.

Inter-repetition frequency hopping may be applied to the PUSCH corresponding to the PUSCH repetition type B. For the PUSCH to which the inter-repetition frequency hopping is applied, switching between the first hop and the second hop may be performed based on nominal repetition.

At least two transmission schemes may be supported for the PUSCH. For example, codebook-based transmission may be one of the transmission schemes for the PUSCH. For example, non-codebook-based transmission may be one of the transmission schemes for the PUSCH. A higher layer parameter may provide one of codebook-based transmission and non-codebook-based transmission. For example, in a case that "codebook" is set for the higher layer parameter, the terminal apparatus 1 may be configured with codebook-based transmission. For example, in a case that "nonCodebook" is set for the higher layer parameter, the terminal apparatus 1 may be configured with non-codebook-based transmission. The higher layer parameter may be txConfig. The higher layer parameter may be usage. For example, in a case that the higher layer parameter is not configured, the terminal apparatus 1 may not expect scheduling to be performed in either of the DCI format 0_1 and the DCI format 0_2. In a case that the PUSCH is scheduled in the DCI format 0_0, transmission of the PUSCH may be performed based at least on one antenna port.

In codebook-based transmission, the PUSCH may be scheduled in a DCI format. The DCI format may be any one of the DCI format 0_0, the DCI format 0_1, and the DCI format 0_2. In codebook-based transmission, the PUSCH is configured to be transmitted semi-statically. The terminal apparatus 1 may determine one or multiple precoders for PUSCH transmission. For example, the precoder may be determined based at least on some or all of an SRS resource indicator (SRI), a transmitted precoding matrix indicator (TPMI), and a transmission rank (or rank). For example, the SRI may be provided by a DCI field of one or two SRS resource indicators. For example, the TPMI may be provided by a DCI field of one or two pieces of precoding information. For example, the transmission rank may be provided by a DCI field of the number of layers (the number of transmission layers). The SRI may be provided by a first higher layer parameter. The TPMI and the transmission rank may be provided by a second higher layer parameter. The first higher layer parameter may be srs-ResourceIndicator or srs-ResourceIndicator2. The second higher layer parameter may be precodingAndNumberOfLayers or precodingAndNumberOfLayers2.

An SRS resource set applied to the PUSCH may be determined based on the higher layer parameter. The PUSCH may be scheduled by the DCI format 0_1 or the DCI format 0_2. The higher layer parameter may be srs-ResourceSetToAddModList or srs-ResourceSetToAddModeListDCI-0-2. The higher layer parameter may be a higher layer parameter configured in SRS-Config.

In a case that "codebook" is set for the higher layer parameter usage, one or two SRS resource sets may be configured in srs-ResourceSetToAddModList or srs-ResourceSetToAddModListDCI-0-2. The higher layer parameter usage may be configured in the higher layer parameter SRS-ResourceSet.

In a case that one SRS resource set is configured, the SRI and the TPMI may be given by the DCI field. The TPMI may be used to indicate a precoder. The precoder may be applied across v layers. In a case that multiple SRS resources are configured, one SRS resource may be selected by the SRI. A transmission precoder (precoder) may be selected from a codebook (uplink codebook). For example, the codebook may have the number of antenna ports. The number of antenna ports may be the same as the higher layer parameter nrofSRS-Ports. In a case that "codebook" is set for the higher layer parameter txConfig, the terminal apparatus 1 may be configured with at least one SRS resource. The indicated SRI may relate to transmission of the SRS resource identified by the SRI.

In a case that two SRS resource sets are configured, one or two SRIs and one or two TPMIs may be given by the DCI field. For example, the DCI field may be one or both of a DCI field for SRS resource indication and a DCI field for precoding information and number of layers. The terminal apparatus 1 may apply the indicated SRI and TPMI to one or multiple PUSCH repetitions. The TPMI may be used to indicate the precoder based on a code point for SRS resource set indication. The precoder may be applied to the 0th layer to (v - 1)-th layer. The precoder may correspond to the SRS resource selected by the SRI. Multiple SRS resources may be configured for an applicable SRS resource set. For one or two TPMIs, a transmission precoder (precoder) may be selected from a codebook (uplink codebook). In a case that two SRIs are indicated, the terminal apparatus 1 may expect the numbers of antenna ports for the indicated two SRS resources to be equal. The number of antenna ports may be provided by a higher layer parameter.

In codebook-based transmission, the terminal apparatus 1 may determine a codebook subset. For example, the codebook subset may be determined based at least on a TPMI. The codebook subset may be determined in response to reception of a certain higher layer parameter. The certain higher layer parameter may be codebookSubset or codebookSubsetDCI-0-2. Any of "fullyAndPartialAndNonCoherent", "partialAndNonCoherent", and "nonCoherent" may be set for the certain higher layer parameter. For example, in a case that at least a certain higher layer parameter is set to "partialAndNonCoherent", the codebook subset associated with a 2-port SRS resource (an SRS resource with two ports) may be "nonCoherent". For example, the codebook may include at least one SRS resource with four ports and at least one SRS resource with two ports.

The terminal apparatus 1 may report UE capability. In a case that the terminal apparatus 1 reports the UE capability of "partialAndNonCoherent" transmission, the terminal apparatus 1 may not expect the codebook subset with "fullyAndPartialAndNonCoherent" to be configured.

In a case that the terminal apparatus 1 reports the UE capability of "nonCoherent" transmission, the terminal apparatus 1 may not expect the codebook subset with "fullyAndPartialAndNonCoherent" or "partialAndNonCoherent" to be configured.

In a case that the number of antenna ports indicates that the maximum number of configured SRS antenna ports is 2, the terminal apparatus 1 may not expect the higher layer parameter set to "partialAndNonCoherent" to be configured. The higher layer parameter may be codebookSubset or codebookSubsetForDCI-Format0-2. The number of antenna ports may be determined by the higher layer parameter nrofSRS-Ports.

For codebook-based transmission, one SRS resource may be determined based on the SRI from the SRS resource set. Except the case that a first higher layer parameter is set to "fullpowerMode2", the maximum number of configured SRS resources for codebook-based transmission may be 2. The first higher layer parameter may be ul-FullPowerTransmission. The DCI may indicate transmission of the SRS resource. For example, in a case that an aperiodic SRS is configured, the SRS request field in the DCI may indicate transmission of aperiodic SRS resources. The terminal apparatus 1 may not expect that the first higher layer parameter for which "fullpowerMode1" is set and the second higher layer parameter for which "fullAndPartialAndNonCoherent" is set are configured.

The terminal apparatus 1 may transmit the PUSCH by using the same one or multiple antenna ports as one or multiple SRS ports in the SRS resource indicated by the DCI format or the higher layer parameter. For example, the SRS ports may be the same as the antenna ports for PUSCH transmission. A DMRS antenna port may be determined according to ordering of a DMRS port.

In a case that multiple SRS resources are configured by an SRS resource set, the terminal apparatus 1 may expect the higher layer parameter nrofSRS-Ports with the same value for these SRS resources to be configured. The SRS resource set may be the higher layer parameter SRS-ResourceSet with the higher layer parameter usage for which "codebook" is set.

In a case that the higher layer parameter is set to "fullpowerMode2", one or multiple SRS resources with the same number or different numbers of SRS ports may be configured in one SRS resource set. In a case that the higher layer parameter is set to "fullpowerMode2", up to two different spatial relations may be configured for all SRS resources in one SRS resource set. In a case that the higher layer parameter is set to "fullpowerMode2", up to two or four SRS resources may be configured in one SRS resource set. In addition, up to eight SRS resources may be configured in one SRS resource set. The SRS resource set may be an SRS resource set with the higher layer parameter usage for which "codebook" is set.

For non-codebook-based transmission, the PUSCH may be scheduled by the DCI format 0_0, the DCI format 0_1, or the DCI format 0_2. The terminal apparatus 1 may determine the precoder and the transmission rank of the PUSCH based on the SRI. For example, in a case that multiple SRS resources are configured, the SRI may be given by one or two SRS resource indications in the DCI. For example, the SRI may be given by the higher layer parameter. The SRS resource set applied to the PUSCH may be defined by an entry of the higher layer parameter. The higher layer parameter may be srs-ResourceSetToAddModList or srs-ResourceSetToAddModListDCI-0-2.

The terminal apparatus 1 may use one or multiple SRS resources for SRS transmission. The maximum number of SRS resources in one SRS resource set may be transmitted to the base station apparatus 3 as UE capability. SRS resources may be configured for simultaneous transmission in the same OFDM symbol. Multiple SRS resources transmitted at the same time may occupy the same resource block. One SRS port may be configured in each SRS resource. One or two SRS resource sets may be configured in the higher layer parameter srs-ResourceSetToAddModList where the higher layer parameter usage in the higher layer parameter SRS-ResourceSet is set to "nonCodebook". In a case that two SRS resource sets are configured, one or two SRIs may be given by the DCI field. The DCI field may be a DCI field of two SRS resource indications.

The terminal apparatus 1 may apply the indicated SRI to one or multiple PUSCH repetitions. For example, in accordance with the SRS resource set of the PUSCH repetition, the terminal apparatus 1 may apply the indicated SRI to one or multiple PUSCH repetitions. The maximum number of SRS resources per SRS resource set configured for non-codebook-based transmission may be 4. The maximum number of SRS resources per SRS resource set configured for non-codebook-based transmission may be 8. Each of the indicated one or two SRIs may be associated with the latest transmission of an SRS resource in the SRS resource set identified by the SRI. The SRS transmission may be before the PDCCH carrying the SRI. The terminal apparatus 1 may not expect that the different numbers of SRS resources are configured in the two SRS resource sets.

In a case that multiple PDCCH candidates (PDCCH candidate (s)) are associated with a search space set configured by a higher layer parameter, one PDCCH candidate is used. The one PDCCH candidate may be one of two PDCCH candidates that starts earlier. The higher layer parameter may be a searchSpaceLinking.

For non-codebook-based transmission, the UE may calculate a precoder. For example, a precoder used for SRS transmission may be calculated based on measurement of an NZP CSI-RS resource. One NZP CSI-RS resource may be configured for one SRS resource set. For example, one SRS resource set may be an SRS resource set with the higher layer parameter set to "nonCodebook".

In a case that an aperiodic SRS resource set is configured, the NZP-CSI RS may be indicated through the SRS request field. The SRS request field may be one of the DCI fields in any one of the DCI format 0_1, the DCI format 0_2, the DCI format 1_1, and the DCI format 1_2. The first higher layer parameter may indicate an association between an aperiodic SRStriggerting state (SRS) and an SRS resource set. The first higher layer parameter, a triggered SRS resource, srs-ResourceSetId, and csi-RS may be configured in the higher layer parameter SRS-ResourceSet. The higher layer parameter csi-RS may indicate NZP-CSI-RS-ResourceId. The higher layer parameter SRS-ResourceSet associated with the SRS request may be defined by an entry in a list that is a higher layer parameter. The list that is a higher layer parameter may be the higher layer parameter srs-ResourceSetToAddModList or srs-ResourceSetToAddModListDCI-0-2. The terminal apparatus 1 may not expect to update the precoding information (SRS precoding information). For example, in a case that the gap between the last OFDM symbol in reception of the aperiodic NZP-CSI-RS resource and the first OFDM symbol in transmission of the aperiodic SRS is equal to or less than the 42 OFDM symbols, the terminal apparatus 1 may not expect to update the precoding information.

In a case that the aperiodic SRS associated with the aperiodic NZP CSI-RS resource is configured, the presence of the CSI-RS may be indicated by the SRS request field. In a case that the value of the SRS request field is not "00" and the scheduling DCI is not used for cross carrier scheduling or cross BWP scheduling (cross bandwidth partscheduling), the presence of the CSI-RS may be indicated by the SRS request field.

The terminal apparatus 1 may perform one to-one mapping. One to-one mapping may be mapping from an SRI to a PUSCH layer corresponding to a DMRS port. The 0th to a (v - 1)-th PUSCH layers may be provided. v may be the number of layers. The number of layers may be configured by the higher layer parameter. The terminal apparatus 1 may transmit the PUSCH by using the same antenna port as the SRS port. For example, the SRS port in the SRS resource indicated by the SRI may be indexed as pi = 1000 + i. For example, the SRS port in the (i + 1)-th SRS resource may be pi. In addition, the SRS port in the (i + 1)-th SRS resource may also be indexed as pi. pi may be 1000 + i. In other words, pi = 1000 + i may be satisfied.

In non-codebook-based transmission, the terminal apparatus 1 may not expect both spatial relation information (info) for the SRS resource and the higher layer parameter associatedCSI-RS in the higher layer parameter SRS-ResourceSet for the SRS resource set to be configured. The spatial relation information may be determined by a higher layer parameter. The spatial relation information may be a higher layer parameter spatialRelationInfo. In the non-codebook-based transmission, in a case that at least one SRS resource is configured in the SRS resource set with the higher layer parameter set to "nonCodebook", the terminal apparatus 1 may be scheduled by the DCI format 0_1 or the DCI format 0_2.

A CQI index and its interpretation for reporting a CQI may be indicated based on the modulation scheme.

The terminal apparatus 1 may derive the highest CQI index satisfying the following condition for each CQI value reported in an uplink slot n based on a time-unrestricted observation interval and a frequency-unrestricted observation interval. With a combination of a modulation scheme, a target coding rate, and a transport block size corresponding to a CQI indicator, a single PDSCH transport block occupying a group of downlink physical resource blocks called a CSI reference resource can be received without exceeding a transport block error probability, which may be a condition.

In a case that the higher layer parameter timeRestrictionForChannelMeasurements is configured to "notConfigured", the terminal apparatus 1 may derive the channel measurement for calculating the CSI value reported in the UL slot n based on only the NZP CSI-RS which is not later than the CSI reference resource associated with the CSI resource configuration.

In a case that the higher layer parameter timeRestrictionForChannelMeasurements of the CSI-ReportConfig is "Configured", the terminal apparatus 1 may derive the channel measurement for CSI calculation to be reported in the UL slot n based on only the latest opportunity of the NZP CSI-RS related to the CSI resource configuration and not later than the CSI reference resource.

In a case that the higher layer parameter timeRestrictionForInterferenceMeasurements is configured to "notConfigured", the terminal apparatus 1 may derive the interference measurement value for calculating the CSI value reported in the UL slot n based on only the CSI-IM and/or the NZP CSI-RS so as not to be later than the CSI reference resource associated with the CSI resource configuration.

In a case that the higher layer parameter timeRestrictionForInterferenceMeasurements of the CSI-ReportConfig is "Configured", the terminal apparatus 1 may derive the interference measurement value for calculating the CSI value to be reported in the UL slot n based on the latest opportunity of the CSI-IM for interference measurement and/or the NZP CSI-RS related to the CSI resource configuration which is not later than the CSI reference resource.

For each subband index s, the 2-bit subband differential CQI may be defined as follows: Subband offset level (s) = subband CQI index (s) - wideband CQI index.

A combination of a modulation scheme and a transport block size may correspond to a CQI index in the following cases. According to determination of the transport block size, in a case that the CSI reference resource may be signaled for transmission on the PDSCH and the modulation scheme is indicated by a CQI index and the combination of the transport block size and the modulation scheme is applied to a reference resource, an effective channel coding rate closest to the coding rate indicated by the CQI index may be obtained. In a case that there are a plurality of combinations of transport block sizes and modulation schemes and the effective channel coding rates are equally close to the coding rate indicated by the CQI index, only the combination with the smallest transport block size may be associated.

In a case that the terminal apparatus 1 has two antenna ports and the higher layer parameter codebookType is configured to "typeI-SinglePanel", each PMI value may correspond to a codebook index as follows. The terminal apparatus 1 may be configured with a higher layer parameter twoTX-CodebookSubsetRestriction. The bitmap parameter twoTX-CodebookSubsetRestriction may form a bit sequence a₅, ..., a₁, a₀, in which a₀ is the LSB and as is the MSB. The bit value 0 may indicate that a PMI report is not allowed to correspond to the precoder associated with that bit. Bits from 0 through 3 may be associated with codebook indices 0 through 3, respectively, having the number of layers being one, and bits 4 and 5 may be associated with codebook indices 0 and 1, respectively, having the number of layers being two.

In a case that the terminal apparatus 1 has four or more antenna ports and the higher layer parameter codebookType is configured to "typeI-SinglePanel", each PMI value may correspond to a codebook index as follows. In a case of the number of layers v ≠ {2, 3, 4}, each PMI value may correspond to three codebook indices i_{1, 1}, i_{1, 2}, and i₂. In a case that the number of layers v = {2, 3, 4}, each PMI value may correspond to four codebook indices i_{1,1}, i_{1,2}, i_{1,3}, and i₂. A composite codebook index i₁ may be composed of some or all of i_{1,1}, i_{1,2}, and i_{1,3}.

k₁ and k₂ may be determined as 0 or a multiple of O₁ or O₂ based on i_{1, 3}, the number of layers v, and the antenna configurations N₁ and N₂ of the terminal apparatus 1. Here, N₁ and N₂ may be the numbers of horizontal and vertical antennas arranged on the antenna panel of the terminal apparatus 1. In addition, O₁ and O₂ may be the numbers of oversampling operations for determining the beam sweeping steps of the terminal apparatus 1 in the horizontal and vertical directions. The supported combinations (N₁, N₂) and (O₁, O₂) may be determined based on the number of CSI-RS ports P_{CSI-RS} of the terminal apparatus 1.

N₁ and N₂ may be configured with a higher layer parameter n1 - n2. The number of CSI-RS ports, P_{CSI-RS}, may be given by 2N₁N₂. In a case that the value of N₂ is 1, the terminal apparatus 1 may use only i_{1, 2} = 0 and may not report i_{1, 2}.

A bitmap parameter n1 - n2 may form a bit sequence a_{Ac-1}, ..., a₁, a₀, in which a₀ is the LSB and a_{Ac-1} is the MSB. The bit value 0 may indicate that a PMI report is not allowed to correspond to any precoder associated with that bit. The number of bits may be given by Ac = N₁O₁N₂O₂. A bit a_{N2O2, 1 + m} may be associated with all precoders based on the quantities v_{l, m}, l = 0, ..., N₁O₁ - 1, m = 0, ..., N₂O ₂ - 1 except for the number of layers v ∈ {3, 4} and the number of antenna ports being 16, 24, and 32. In a case that the number of layers v ∈ {3, 4} and the number of antenna ports is any one of 16, 24, and 32, a bit a_{(N2O2 (2l - 1) + m) modN1O1N2O2},a_{N2O2 (2l) + m} and a_{N2O2 (2l + 1)m} may each be associated with all precoders based on quantities v_{l, m}, l = 0, ..., N₁O₁ - 1, m = 0, ..., N₂O₂ - 1. In a case that one or more of the associated bits are zero, the PMI report may not correspond to any precoder based on v_{l, m}.

In a case that the higher layer parameter codebookType is configured to "typeI-SinglePanel", the bitmap parameter typeI-SinglePanel-ri-Restriction may form a bit sequence r₇, ..., r₁, r₀ in which r₀ is the LSB and r₇ is the MSB. In a case that rᵢ is 0, the report of i ∈ {0, 1, ..., 7}, PMI, and RI may not correspond to any precoder associated with layer v = i + 1.

In a case that the higher layer parameter reportQuantity is configured to "cri-RI-i1-CQI", the bitmap parameter typeI-SinglePanel-codebookSubsetRestriction-i2 may form a bit sequence of b₁₅, ..., b₁, b₀ in which b₀ is the LSB and b₁₅ is the MSB. Bit bᵢ may be associated with a precoder corresponding to codebook index i₂ = i. In a case that bᵢ is 0, the precoder randomly selected for CQI calculation may not correspond to any precoder associated with bit bᵢ.

A precoding matrix W may be determined based on the number of CSI-RS ports P_{CSI-RS} and some or all of the quantities ϕₙ, θₚ, uₘ, v_{l, m}, and ṽ_{l, m}. Furthermore, each of the quantities may be determined based on some or all of l, m, n, and p, and l, m, n, and p may be determined based on some or all of i₁ and i₂.

In a case that the terminal apparatus 1 has eight or more antenna ports and the higher layer parameter codebookType is configured to "typeI-MultiPanel", the values of N_{g}, N₁, and N₂ may be set to the higher layer parameter ng-n1-n2. The number of CSI-RS ports P_{CSI-RS} may be given by 2N_{g}N₁N₂. The supported combinations (N_{g}, N₁, N₂) and (O₁, O₂) may be determined based on the number of CSI-RS ports P_{CSI-RS} of the terminal apparatus 1. In a case of N_{g} = 2, codebookMode may be configured to 1 or 2. In a case of N_{g} = 4, codebookMode may be configured to 1. Here, N_{g} may be the number of panels constituting the antenna panel of the terminal apparatus 1.

The bitmap parameter ng - n1 - n2 may form a bit sequence a_{Ac - 1}, ..., a₁, a₀, in which a₀ is the LSB and a_{Ac - 1} is the MSB. A bit value of 0 may indicate that the PMI report cannot correspond to any precoder associated with that bit. The number of bits Ac may be given by N₁O₁N₂O₂. Bit a_{N2O2l + m} may be associated with all precoders based on the quantities v_{l, m}, l = 0, ..., N₁O₁ - 1, m = 0, ..., N₂O₂ - 1. The bitmap parameter ri-Restriction may form a bit sequence r₃, ..., r₁, r₀ in which r₀ is the LSB and r₃ is the MSB. In a case that rᵢ is 0, the report of i ∈ {0, 1, ..., 3}, PMI, and RI may not correspond to any precoder associated with layer v = i + 1.

Each PMI value may correspond to a codebook index i₁ and i₂. In a case of the number of layers v = 1, i₁ may include some or all of i_{1, 1}, i_{1, 2}, and i_{1, 4}. In a case of the number of layers v ∈ {2, 3, 4}, i₁ may include some or all of i_{1, 1}, i_{1, 2}, i_{1, 3}, and i_{1, 4}. Here, v may be associated with an RI value.

In a case that codebookMode is configured to 1 and N_{g} = 2, i_{1, 4} may include i_{1, 4, 1}. In a case that codebookMode is configured to 1 and N_{g} = 4, i_{1, 4} may include some or all of i_{1, 4, 1}, i_{1, 4, 2}, and i_{1, 4, 3}. In a case that codebookMode is configured to 2, i_{1, 4} may include some or all of i_{1, 4, 1} and i_{1, 4, 2}, and i₂ may include some or all of i_{2, 0}, i_{2, 1}, and i_{2, 2}.

k₁ and k₂ may be determined as 0 or a multiple of O₁ or O₂ based on i_{1, 3}, the number of layers v, and the antenna configurations N_{g}, N₁, and N₂ of the terminal apparatus 1. In a case of N₂ = 1, the terminal apparatus 1 may use only i_{1, 2} = 0 and may not report i_{1, 2}.

Precoding matrix W^{(v)}_{l, m, p, n} may include some or all of W^{1, 2, 1}_{l, m, p, n}, W^{2, 2, 1}_{l,m,p,n}, W^{1, 4, 1}_{l, m, p, n}, W^{2, 4, 1}_{l, m, p, n}, W^{1, 2, 2}_{l, m, p, n}, W^{2, 2, 2}_{l, m, p, n}. Here, W^{1, 2, 1}_{l, m, p, n}, W^{2, 2, 1}_{l, m, p, n}, W^{1, 4, 1}_{l, m, p, n}, W^{2, 4, 1}_{l, m, p, n}, W^{1, 2, 2}_{l, m, p, n}, W^{2, 2, 2}_{l, m, p, n} may be determined based on some or all of the number of CSI-RS ports P_{CSI-RS} and the quantities ϕₙ, aₚ, bₙ, uₘ, and v_{l, m}. Furthermore, each of the quantities may be determined based on some or all of l, m, n, and p, and l, m, n, and p may be determined based on some or all of i₁ and i₂. Here, p may include some or all of p₁, p₂, and p₃, and n may include some or all of n₀, n₁, and n₂.

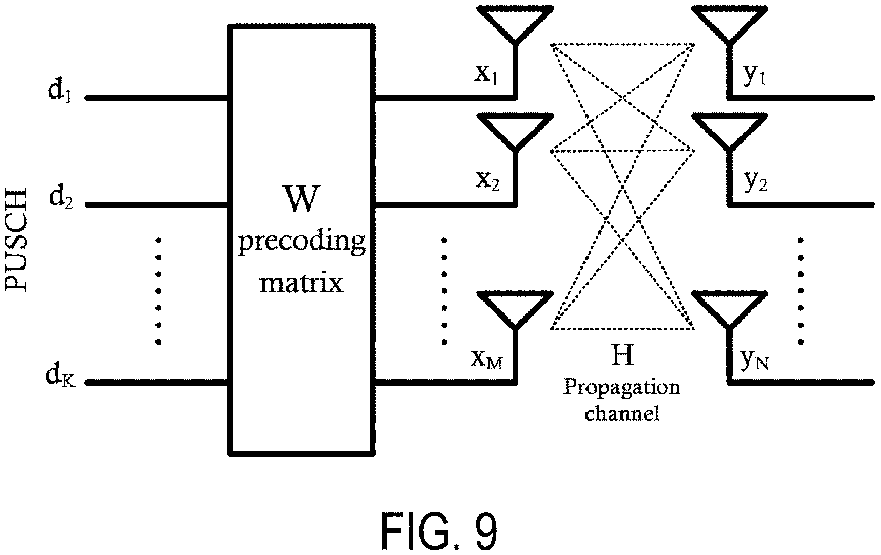

FIG. 9 is a diagram illustrating an example of an application method of a precoding matrix according to an aspect of the present embodiment. In FIG. 9, W represents a precoding matrix, and precoding for the PUSCH is performed based on the precoding matrix W.

In FIG. 9, the vectors d₁, d ₂, ..., d_{K} are subjected to precoding based on the precoding matrix W to be converted into vectors x₁, x₂, ..., x_{M}. The vectors d₁, d₂, ..., d_{K} may be PUSCH data of the number of layers K. The vectors x₁, x₂, ..., x_{M} may be transmission data of the number of transmission-side antenna ports M. In this case, conversion from d₁, d₂, ..., d_{K} to x₁, x₂, ..., x_{M} is obtained by multiplication by the precoding matrix W. The size of the precoding matrix W may be determined based on the number of layers K and the number of transmission-side antenna ports M. The vectors x₁, x₂, ..., x_{M} are received over the propagation channel H as vectors y₁, y₂, ..., y_{N}. The vectors y₁, y₂, ..., y_{N} may be reception data of the number of reception-side antenna ports N. The size of the propagation channel H may be determined based on the number of transmission-side antenna ports M and the number of reception-side antenna ports N.

For non-codebook-based transmission, the precoding matrix W may be equal to a unit matrix. In a case of codebook-based transmission, the precoding matrix W may be given as W = 1 in the case of one layer transmission in a single antenna port. Otherwise, it may be given by a TPMI index obtained from a DCI for scheduling a PUSCH or a higher layer parameter. In a case that the higher layer parameter "txConfig" is not configured, the precoding matrix W = 1 may be set.

The antenna configuration of the terminal apparatus 1 may be given based on n1-n2-codebookSubsetRestriction, n1-n2-codebookSubsetRestriction-r16, and n1-n2-codebookSubsetRestriction-r18.

The terminal apparatus 1 may edit capability information of the terminal. The terminal apparatus 1 may transfer the capability information of the terminal. In a case that UECapabilityEnquiry is received from a network, the terminal apparatus 1 may edit and transfer the capability information of the terminal (UE capability information). In addition, a notification of the capability information of the terminal may be performed according to the following procedure.

In a case that the network needs (additional) UE radio access capability information, a procedure may be initiated for the terminal in RRC_CONNECTED. The capability of the UE may be acquired only after activation of AS security. The capability of the UE acquired before AS security activation may not be forwarded to a CN.

In a case that UE-CapabilityRAT-Request in which nr is configured to rat-Type is included in ue-CapabilityRAT-RequestList, the terminal apparatus 1 may configure the content of a UECapabilityInformation message as follows. UE-CapabilityRAT-Container whose type is UE-NR-Capability and nr is configured to rat-Type may be included in ue-CapabilityRAT-ContainerList. supportedBandCombinationList, featureSets and featureSetCombinations may be included.

In a case that UE-CapabilityRAT-Request in which eutra-nr is configured to rat-Type is included in ue-CapabilityRAT-RequestList and the UE supports (NG) EN-DC or NE-DC, the terminal apparatus 1 may configure the content of a UECapabilityInformation message as follows. UE-CapabilityRAT-Container whose type is UE-MRDC-Capability and eutra-nr is configured to rat-Type may be included in ue-CapabilityRAT-ContainerList. supportedBandCombinationList and featureSetCombinations may be included.

In a case that UE-CapabilityRAT-Request in which eutra is configured to rat-Type is included in ue-CapabilityRAT-RequestList and the UE supports E-UTRA, the terminal apparatus 1 may configure the content of a UECapabilityInformation message as follows. ue-CapabilityRAT-Container configured with received type UE-EUTRA-Capability and eutra configured to rat-Type may be included in ue-CapabilityRAT-ContainerList.

In a case that UE-CapabilityRAT-Request in which utra-fdd is configured to rat-Type is included in ue-CapabilityRAT-RequestList and the UE supports UTRA-FDD, the terminal apparatus 1 may configure the content of a UECapabilityInformation message as follows. UE radio access capability for UTRA-FDD with utra-fdd configured to rat-Type may be included in ue-CapabilityRAT-Container.

In a case that segmentation of an RRC message is valid based on the received field rrc-SegAllowed and the encoded RRC message is larger than the maximum supported size of the PDCP SDU, the terminal apparatus 1 may configure the content of a UECapabilityInformation message as follows. A UL message segment transfer procedure may be initiated.

In cases other than the above, the terminal apparatus 1 may configure the content of the UECapabilityInformation message as follows. The UECapabilityInformation message may be transmitted to lower layers, at which point the procedure may be terminated.

The terminal apparatus 1 may invoke the procedure in a case that the NR or E-UTRA network requires the capability of the UE for nr, eutra-nr or eutra. This procedure may be invoked once for each requested rat-Type. The terminal apparatus 1 may ensure that a feature set ID is consistent in a feature set, a combination of the feature sets, and a combination of bands in all the three UE capability containers in which the network inquires the same field with the same value. The UE capability containers may be fields of UE-CapabilityRequestFilterNR, UE-CapabilityRequestFilterCommon, and UECapabilityEnquiry messages.

Capability queries that do not use frequencyBandListFilter may not be supported.

In EN-DC, a gNB may require capabilities of RAT types nr and eutra-nr. In addition, together with featureSetCombinations of UE-MRDC-Capability, featureSets in UE-NR-Capability may be used to determine the NR UE capability for a combination of supported MRDC bands. Similarly, an eNB may require capabilities for RAT types eutra and eutra-nr. In addition, featureSetsEUTRA in UE-EUTRA-Capability may also be used together with featuresSetCombinations in UE-MRDC-Capability to determine the E-UTRA UE capability for a combination of supported MRDC bands. IDs used in featureSets may match the ID referenced in featureSetCombinations in all three containers. A requirement for consistency may mean that there are no combinations of undefined feature sets and feature sets.

In a case that the UE cannot include all feature sets and feature set combinations due to constraints on a message size or list size, which feature sets and feature set combinations should be prioritized may be up to UE implementation.

The terminal apparatus 1 may create a list of "band combination candidates" including only bands included in frequencyBandListFilter in accordance with the filter criterion of capabilityRequestFilterCommon (if included). In addition, priorities of frequencyBandListFilter may also be assigned. The prioritization may be configured in a method in which a combination of bands including a first listed band is included first and then a combination of remaining bands including a second listed band is included, and the like. Here, for each band of a band combination, the parameter of the band may not exceed any received one of maxBandwidthRequestedDL, maxBandwidthRequestedUL, maxCarriersRequestedDL, maxCarriersRequestedUL, ca-BandwidthClassDL-EUTRA, or ca-BandwidthClassUL-EUTRA.

For each band combination included in the list of "band combination candidates", in a case that the network (E-UTRA) includes the eutra-nr-only field or in a case that the requested rat-Type is eutra, the terminal apparatus 1 may delete the band combination of only NR from the list of "band combination candidates".

Although a capability for nr may be requested by the E-UTRA network, not including a combination of NR bands in UE-NR-Capability may be indicated by an eutra-nr-only flag. In this case, the above procedure may remove all NR-only band combinations from the candidate list, thereby also avoiding inclusion of the combination of corresponding feature sets and the following feature sets.

The terminal apparatus 1 may delete the band combination from the list of "candidate band combinations" in a case that the band combination is regarded as the combination of the reserved bands having the same capability as that of the other band combination included in the list of "band combination candidates" or in a case that a combination of the reserved bands is generated by releasing at least one SCell or the uplink configuration of the SCell.

An E-UTRA band number may be included in frequencyBandListFilter so that even in a case that only nr functionality is requested by the network, the UE will then include all feature sets required for the requested eutra-nr functionality. At this point in the procedure, the list of "band combination candidates" may include all NR- and/or E-UTRA-NR band combinations that match the filter (frequencyBandListFilter) provided by the NW and that match the eutra-nr only flag (in a case that RAT-Type nr is requested by E-UTRA). In the following procedure, this candidate list may be used to derive band combinations, feature set combinations, and feature sets to be reported in the requested capability container.

In a case that the requested rat-Type is nr, the terminal apparatus 1 may include as many NR-only band combinations as possible from the list of "band combination candidates" in supportedBandCombinationList from the first entry. In addition, in a case that srs-SwitchingTimeRequest is received and SRS carrier switching is supported, srs-SwitchingTimesListNR may be included for each band combination. At this time, srs-SwitchingTimeRequested may be configured to true.

In a case that the requested rat-Type is nr, the terminal apparatus 1 may include a feature set combination referred to from the corresponding band combination included in supportedBandCombinationList in featureSetCombinations. In addition, the list of "candidate feature set combinations" referred to from the list of "candidate band combinations" may be compiled except for entries (rows of feature set combinations) having the same or lower capabilities.

In a case that the requested rat-Type is nr and uplinkTxSwitchRequest is received, the terminal apparatus 1 may include the band combination of only NR supporting UL TX switching in supportedBandCombinationList-UplinkTxSwitch as much as possible from the first entry from the list of the "candidate band combinations". Thereafter, in a case that srs-SwitchingTimeRequest is received and SRS carrier switching is supported, srs-SwitchingTimesListNR may be included for each band combination. At this time, srs-SwitchingTimeRequested may be configured to true.

In a case that the requested rat-Type is nr and uplinkTxSwitchRequest is received, the terminal apparatus 1 may include the feature set combination referred to from the support band combination included in supportedBandCombinationList-UplinkTxSwitch in featureSetCombinations.

The list of "feature set combination candidates" may include not only a combination of E-UTRA-NR bands but also a combination of feature sets used exclusively for NR. The list may be used to derive a list of NR feature sets referred to from the combination of feature sets in UE-NR-Capability and the combination of feature sets in the UE-MRDC-Capability container.

In a case that the requested rat-Type is nr, the terminal apparatus 1 may include the feature set referred to from the "combination of candidate feature sets" in featureSets. In addition, feature sets having parameters exceeding any of maxBandwidthRequestedDL, maxBandwidthRequestedUL, maxCarriersRequestedDL, and maxCarriersRequestedUL may be received or excluded.

In a case that the requested rat-Type is eutra-nr, the terminal apparatus 1 may sequentially insert as many E-UTRA-NR band combinations as possible from the list of "band combination candidates" into supportedBandCombinationList and/or supportedBandCombinationListNEDC-Only from the first entry. In addition, in a case that srs-SwitchingTimeRequest is received and SRS carrier switching is supported, srs-SwitchingTimesListNR and srs-SwitchingTimesListEUTRA may be included for each band combination. At this time, srs-SwitchingTimeRequested may be configured to true.

In a case that the requested rat-Type is eutra-nr, the terminal apparatus 1 may include a feature set combination referred to from the corresponding band combination included in supportedBandCombinationList in featureSetCombinations in accordance with the preceding section. In addition, the list of "candidate feature set combinations" referred to from the list of "candidate band combinations" may be compiled except for entries (rows of feature set combinations) having the same or lower capabilities.

In a case that the requested rat-Type is eutra-nr and uplinkTxSwitchRequest is received, the terminal apparatus 1 may include the combination of bands exclusive to NR supporting the UL TX switching from the list of the "band combination candidates" in the supportedBandCombinationList-UplinkTxSwitch as many as possible from the first entry. In addition, in a case that srs-SwitchingTimeRequest is received and SRS carrier switching is supported, srs-SwitchingTimesListNR may be included for each band combination. At this time, srs-SwitchingTimeRequested may be configured to true.

In a case that the requested rat-Type is eutra-nr and uplinkTxSwitchRequest is received, the terminal apparatus 1 may include the feature set combination referred to from the support band combination included in supportedBandCombinationList-UplinkTxSwitch in featureSetCombinations.

In a case that the requested rat-Type is eutra, the terminal apparatus 1 may compile the list of "feature set combination candidates" referred to from the list of "band combination candidates" except for entries (rows of feature set combinations) having capabilities equal to or less than those of the aforementioned list.

The list of "feature set combination candidates" may include a combination of feature sets used in combinations of the E-UTRA-NR band. The list may be used to derive a list of E-UTRA feature sets referred to from the combination of feature sets in the UE-MRDC-Capability container.

In a case that the requested rat-Type is eutra, the terminal apparatus 1 may include the feature set referred to from the "candidate feature set combinations" in the featureSetsEUTRA (in the UE-EUTRA-Capability). In addition, feature sets of parameters exceeding ca-BandwidthClassDL-EUTRA or ca-BandwidthClassUL-EUTRA may be received or excluded.

The terminal apparatus 1 may include the received frequencyBandListFilter in the field appliedFreqBandListFilter of the requested UE capability except for a case that the requested rat-Type is nr and the eutra-nr-only field is included in the network.

In a case that ue-CapabilityEnquiryExt is included in the network, the terminal apparatus 1 may include the received ue-CapabilityEnquiryExt in the receivedFilters field.

The terminal apparatus 1 transmits first information, receives second information for determining a precoding matrix for the PUSCH, determines the precoding matrix based on DCI for scheduling the PUSCH and the second information for determining the precoding matrix for the PUSCH, and performs precoding for the PUSCH based on the precoding matrix. The terminal apparatus 1 may transmit the first information. The terminal apparatus 1 may receive the second information. The second information may be used to determine a precoding matrix for the PUSCH. The precoding matrix may be used in precoding for the PUSCH. A precoding matrix may be determined based at least on the DCI and the second information. The DCI may schedule the PUSCH. The terminal apparatus 1 may perform precoding for the PUSCH based on the precoding matrix. Precoding may be performed based at least on the precoding matrix. The second information may be information for calculating a pre-coding matrix.

The first information may be capability information of the terminal apparatus 1. The first information may be the number of antenna ports. The first information may be information indicating one or multiple numbers of antenna ports. The first information may be information indicating two numbers of antenna ports and one number of panels. The first information may be information indicating the numbers of first antenna ports of a first dimension and a second dimension. The first information may be determined based on an antenna configuration of the terminal apparatus 1. The first information may be a UE capability determined based on an antenna configuration of the terminal apparatus 1. The first information may be transmitted (reported) to the base station apparatus 3 as the UE capability. The first information may be assistance information determined based on an antenna configuration of the terminal apparatus 1. The first information may be an RRC parameter determined based on the antenna configuration of the terminal apparatus 1. The first information may be determined based on channel state information. The first information may be a UE capability determined based on channel state information. The first information may be assistance information determined based on channel state information. The first information may be an RRC parameter determined based on channel state information. The first information may be the number of antennas (physical antennas) of the terminal apparatus 1. The first information may be information related to one or both of the number of antennas and the arrangement of the antennas.

The first information may be some or all of nrOfAntennaPorts, twoTX-CodebookSubsetRestriction, n1-n2, typeI-SinglePanel-codebookSubsetRestriction-i2, typeI-SinglePanel-ri-Restriction, ng-n1-n2, ri-Restriction, codebookMode, n1-n2-codebookSubsetRestriction, typeII-RI-Restriction, portSelectionSamplingSize, typeII-PortSelectionRI-Restriction, phaseAlphabetSize, subbandAmplitude, numberOfBeams, n1-n2-codebookSubsetRestriction-r16, typeII-RI-Restriction-r16, portSelectionSamplingSize-r16, typeII-PortSelectionRI-Restriction-r16, numberOfPMI-SubbandsPerCQI-Subband-r16, paramCombination-r16, n1-n2-codebookSubsetRestriction-r18, typeII-RI-Restriction-r18, portSelectionSamplingSize-r18, typeII-PortSelectionRI-Restriction-r18, and numberOfPMI-SubbandsPerCQI-Subband-r18. The first information may be some or all of N_{g}, N₁, N₂, O₁, O₂, i₁, i₂, k₁, k₂, l, m, n, and p.

The second information may be an RRC parameter. The second information may be an RRC parameter for determining a codebook used in precoding for the PUSCH. The second information may be the number of antenna ports. The second information may be information indicating one or multiple numbers of antenna ports. The second information may be information indicating two numbers of antenna ports and one number of panels. The second information may be information indicating the numbers of second antenna ports of a first dimension and a second dimension. The numbers of first antenna ports indicated by the first information may be different from the numbers of second antenna ports indicated by the second information. For example, the numbers of the second antenna ports may be the same as the numbers of the first antenna ports or less than the numbers of the first antenna ports. The first number of panels indicated by the first information may be different from the second number of panels indicated by the second information. The second information may be determined based on an antenna configuration of the terminal apparatus 1. The second information may be a UE capability determined based on the antenna configuration of the terminal apparatus 1. The second information may be transmitted (reported) to the base station apparatus 3 as the UE capability. The second information may be assistance information determined based on the antenna configuration of the terminal apparatus 1. The second information may be an RRC parameter determined based on the antenna configuration of the terminal apparatus 1. The second information may be determined based on channel state information. The second information may be a UE capability determined based on channel state information. The second information may be assistance information determined based on channel state information. The second information may be an RRC parameter determined based on channel state information. The second information may be information for codebook subset restriction. For example, the second information may be information for restricting codebook subsets. For example, a codebook subset may be determined based at least on the second information.

The second information may be some or all of nrOfAntennaPorts, twoTX-CodebookSubsetRestriction, n1-n2, typeI-SinglePanel-codebookSubsetRestriction-i2, typeI-SinglePanel-ri-Restriction, ng-n1-n2, ri-Restriction, codebookMode, n1-n2-codebookSubsetRestriction, typeII-RI-Restriction, portSelectionSamplingSize, typeII-PortSelectionRI-Restriction, phaseAlphabetSize, subbandAmplitude, numberOfBeams, n1-n2-codebookSubsetRestriction-r16, typeII-RI-Restriction-r16, portSelectionSamplingSize-r16, typeII-PortSelectionRI-Restriction-r16, numberOfPMI-SubbandsPerCQI-Subband-r16, paramCombination-r16, n1-n2-codebookSubsetRestriction-r18, typeII-RI-Restriction-r18, portSelectionSamplingSize-r18, typeII-PortSelectionRI-Restriction-r18, and numberOfPMI-SubbandsPerCQI-Subband-r18. The second information may be some or all of N_{g}, N₁, N₂, O₁, O₂, i₁, i₂, k₁, k₂, l, m, n, and p.

The information for determining a codebook matrix from the restricted codebook subset based on the first information may be indicated in the DCI. The information for determining a codebook matrix from the restricted codebook subset based on the second information may be indicated in the DCI. Here, the information for determining the codebook matrix may be i1 and i2. i₁ and i₂ may be indicated by the DCI. Each value of the TPMI field in the DCI may be associated with i1 and i2.

The information indicating the number of antenna ports of the first dimension and the second dimension may be N₁ and N₂. The information indicating the number of antenna ports of the first dimension and the second dimension may be some or all of N_{g}, N₁, and N ₂. The information indicating the number of first antenna ports of the first dimension and the second dimension and the information indicating the number of second antenna ports of the first dimension and the second dimension may be the same or different information. The information indicating the number of first antenna ports of the first dimension and the second dimension and the information indicating the number of second antenna ports of the first dimension and the second dimension may be determined by comparison.

Various aspects of apparatuses according to an aspect of the present embodiment will be described below.

(1) A first aspect of the present invention is a terminal apparatus including a reception unit configured to receive a PDCCH in which DCI for scheduling a PUSCH is mapped; and a transmission unit configured to transmit the PUSCH, in which the transmission unit transmits capability information of a terminal, the capability information of the terminal is information indicating the number of first antenna ports of a first dimension and a second dimension, the reception unit receives an RRC parameter, a precoding matrix for the PUSCH is determined based at least on the DCI and the RRC parameter, the precoding is performed based at least on the precoding matrix, and the RRC parameter is information for calculating the precoding matrix.
(2) Furthermore, the capability information of the terminal is determined based on one or both of an antenna configuration and channel state information of the terminal apparatus.
(3) Furthermore, the information for calculating the precoding matrix is information indicating the number of second antenna ports of the first dimension and the second dimension. Alternatively, the information for calculating the precoding matrix is determined based on channel state information.
(4) In addition, a second aspect of the present invention is a base station apparatus including a transmission unit configured to transmit a PDCCH in which DCI for scheduling a PUSCH is mapped; and a reception unit configured to receive the PUSCH, in which the reception unit receives capability information of a terminal, the capability information of the terminal is information indicating the number of first antenna ports of a first dimension and a second dimension, the transmission unit receives an RRC parameter for determining a codebook used in precoding for the PUSCH, ascertains that a precoding matrix for the PUSCH is determined based at least on the DCI and the RRC parameter, and ascertains that the precoding is performed based at least on the precoding matrix, and the RRC parameter is information for calculating the precoding matrix.
(5) Furthermore, the capability information of the terminal is determined based on one or both of an antenna configuration and channel state information of the terminal apparatus.
(6) Furthermore, the information for calculating the precoding matrix is information indicating the number of second antenna ports of the first dimension and the second dimension. Alternatively, the information for calculating the precoding matrix is determined based on channel state information.
(7) In addition, a third aspect of the present invention is a communication method used in a terminal apparatus, including a step of receiving a PDCCH including DCI for scheduling a PUSCH; and a step of transmitting the PUSCH, in which capability information of a terminal is transmitted, the capability information of the terminal is information related to a capability of the terminal apparatus for determining a precoding matrix, an RRC parameter for determining a codebook used in precoding for the PUSCH is received, a precoding matrix is determined based at least on the DCI and the RRC parameter, and precoding for the PUSCH is performed based at least on the precoding matrix.
(8) Furthermore, the capability information of the terminal is determined based on one or both of an antenna configuration and channel state information of the terminal apparatus.
(9) Furthermore, information for calculating the precoding matrix is information indicating the number of second antenna ports of the first dimension and the second dimension. Alternatively, the information for calculating the precoding matrix is determined based on channel state information.
(10) In addition, a fourth aspect of the present invention is a communication method used in a base station apparatus, including a step of transmitting a PDCCH including DCI for scheduling a PUSCH; and a step of receiving the PUSCH, in which capability information of a terminal is received, the capability information of the terminal is information related to a capability of a terminal apparatus for determining a precoding matrix, an RRC parameter for determining a codebook used in precoding for the PUSCH is transmitted, determination of a precoding matrix is ascertained based at least on the DCI and the RRC parameter, and performing precoding for the PUSCH is ascertained based at least on the precoding matrix.
(11) Furthermore, the capability information of the terminal is determined based on one or both of an antenna configuration and channel state information of the terminal apparatus.
(12) Furthermore, information for calculating the precoding matrix is information indicating the number of second antenna ports of the first dimension and the second dimension. Alternatively, the information for calculating the precoding matrix is determined based on channel state information.

Each program running on a base station apparatus 3 and a terminal apparatus 1 according to the present invention may be a program that controls a Central Processing Unit (CPU) and the like, such that the program causes a computer to operate in such a manner as to realize the functions of the above-described embodiment according to the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope that do not depart from the gist of the present invention. Furthermore, in the present invention, various modifications are possible within the scope of claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Industrial Applicability

The present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 Base station apparatus
10, 30 Radio transmission and/or reception unit
10a, 30a Radio transmission unit
10b, 30b Radio reception unit
11, 31 Antenna unit
12, 32 RF unit
13, 33 Baseband unit
14, 34 Higher layer processing unit
15, 35 Medium access control layer processing unit
16, 36 Radio resource control layer processing unit
91, 92, 93, 94 Search space set
300 Component carrier
301 Primary cell
302, 303 Secondary cell
700 Set of resource elements for PSS
710, 711, 712, 713 Set of resource elements for PBCH and DMRS for PBCH
720 Set of resource elements for SSS
3000 Point
3001, 3002 Resource grid
3003, 3004 BWP
3011, 3012, 3013, 3014 Offset
3100, 3200 Common resource block set

## Claims

1. A terminal apparatus comprising:
a reception unit configured to receive a PDCCH in which DCI for scheduling a PUSCH is mapped; and
a transmission unit configured to transmit the PUSCH,
wherein the transmission unit transmits capability information of a terminal, and
the capability information of the terminal is a first parameter and a second parameter related to the number of antenna ports of the terminal.

2. A base station apparatus comprising:
a transmission unit configured to transmit a PDCCH in which DCI for scheduling a PUSCH is mapped; and
a reception unit configured to receive the PUSCH,
wherein the reception unit receives capability information of a terminal, and
the capability information of the terminal is a first parameter and a second parameter related to the number of antenna ports of the terminal.

3. A communication method comprising the steps of:
receiving a PDCCH in which DCI for scheduling a PUSCH is mapped; and
transmitting the PUSCH,
wherein capability information of a terminal is transmitted, and
the capability information of the terminal is a first parameter and a second parameter related to the number of antenna ports of the terminal.
